# EUROPEAN PATENT APPLICATION

(11) **EP 4 813 717 A1**
(43) Date of publication of application: **30.09.2026**
(21) Application number: 23963289.6
(22) Date of filing: 28.12.2023
(51) Int. Cl.: B60K 35/23, B60K 35/40, G02B 5/30, G02B 27/01

(54) **COMPACT, SUNLIGHT-AVOIDING IMAGING DEVICE FOR VEHICLE**

(71) Applicant: LG Electronics Inc., Yeongdeungpo-gu Seoul 07336 (KR)
(72) Inventor: LEE, Sangil, Seoul 06772 (KR); RYU, Juhyeok, Seoul 06772 (KR); LEE, Kyoungil, Seoul 06772 (KR); KWON, Yunyoung, Seoul 06772 (KR)
(74) Representative: Schornack, Oliver
(86) International application number: PCT/KR2023/021887
(87) International publication number: WO 2025/143325

(57) **Abstract**

This imaging device for a vehicle comprises: an image formation device which is disposed inside a dashboard of the vehicle and forms an optical signal on one side; a concave mirror disposed spaced apart from the PGU to transmit the optical signal; a first flat mirror disposed spaced apart from the concave mirror in a first direction to reflect the transmitted optical signal; and a second flat mirror disposed spaced apart from the concave mirror in a second direction opposite to the first direction to reflect, toward the concave mirror, a second optical signal which is the reflected optical signal re-transmitted through the concave mirror.

## Description

### Technical Field

The specification relates to an imaging device for a vehicle. More specifically, the specification relates to a compact and sunlight-avoiding imaging device for a vehicle.

### Background Art

A vehicle is a device which is moved in a direction desired by a user riding therein. A representative example may be an automobile.

Meanwhile, for convenience of users of vehicles, various sensors and electronic devices are increasingly being included in the vehicles. In particular, research on advanced driver assistance systems (ADASs) are being actively conducted to assist driving convenience of the users. In addition, autonomous vehicles are being actively developed.

In this regard, a display for a vehicle showing various driving information is located below a forward line of sight of a driver, which affects rubber necking, i.e., driving safety. Therefore, recently, like a head-up display (HUD), the display for a vehicle may be mounted on a vehicle equipped with an imaging device for a vehicle to ensure driving safety by implementing an image on a windshield on a front side of the vehicle in close proximity to a field of view for driving.

In addition, there is a need to provide an imaging device for a vehicle, the imaging device being configured to display driving-related information in a region in front of a driver's seat or provide personal entertainment content in a region in front of a passenger seat or a rear seat of a vehicle.

Meanwhile, in the imaging device for a vehicle, as optical signals for displaying images are output to a windshield, sunlight from sun in a periphery needs to proceed toward outside a line-of-sight region of an occupant inside the vehicle. Accordingly, to avoid direct light and reflected light caused by the sunlight, a path of the sunlight needs to be changed to outside the line-of-sight region of the occupant through a reflection structure within the vehicle.

In this regard, US 20120224062 A1 discloses that an optical signal emitted from a light source proceeds to a field-of-view region of a user through a flat mirror and a curved mirror. Meanwhile, there is a problem in that sunlight from outside a windshield is reflected from the curved mirror and proceeds to the field-of-view region of the user. In addition, an imaging device for a vehicle, disclosed in US 20120224062 A1, has a problem in that a height along a Z-axis is increased, thereby increasing a volume thereof.

Meanwhile, in Korean Patent Registration No. 10-1909374, since an imaging device for a vehicle includes a structure having first and second flat mirrors and a concave mirror arranged to be adjacent to each other, a height along a Z-axis may be reduced. However, a phenomenon of back reflection of sunlight may occur between the first and second flat mirrors and a picture generation unit.

Therefore, when distances between optical components are decreased as much as possible to reduce volume, this causes limitations in angles and positions of the optical components and back reflection of the sunlight inevitably occurs. That is, when volume is reduced only by adjusting distances and positions between components, there are problems such that an effect of sunlight back reflection occurs and a volume reduction effect is also insufficient.

### Disclosure of Invention

### Technical Problem

An objective of the specification is to provide an imaging device for a vehicle, the imaging device having a reduced volume and being designed to avoid sunlight from a field of view of a driver, and a vehicle including the imaging device.

In addition, an objective of the specification is to avoid visibility defects caused by sunlight in a head-up display (HUD) structure having a reduced volume with a height reduced in a whole structure.

An objective of the specification is to defocus back-reflection of sunlight to evade thermal damage to a display and a driver glare phenomenon caused by back-reflection of light.

An objective of the specification is to provide a customized design of an imaging device for a vehicle according to a limited space inside the vehicle, based on avoidance of a visibility defect caused by sunlight.

The problems of the disclosure are not limited to the problems mentioned above, and other problems which are not mentioned will be clearly understood by those skilled in the art from the following description.

### Solution to Problem

To achieve these and other advantages and in accordance with the purpose of the disclosure, as embodied and broadly described herein, there is provided an imaging device for a vehicle, the imaging device including: an image formation device (picture generation unit (PGU)) arranged inside a dashboard of the vehicle and configured to generate an optical signal toward one side; a concave mirror arranged to be apart from the PGU to transmit the optical signal; a first flat mirror arranged to be apart from the concave mirror in a first direction to reflect the transmitted optical signal; and a second flat mirror arranged to be apart from the concave mirror in a second direction opposite to the first direction to reflect a second optical signal, which is a signal obtained as the reflected optical signal is transmitted through the concave mirror again, to be directed toward the concave mirror.

According to an embodiment, the imaging device for a vehicle may include a cover which constitutes an exterior appearance of the dashboard and through which the second optical signal passes, the second optical signal having been transmitted through the second flat mirror. The second optical signal having passed through the cover may display an image in a particular region of a windshield and travel toward an eye-box region of a user.

According to an embodiment, a polarizing film may be attached to the concave mirror to transmit a first polarization component and reflect a second polarization component. A first polarizing film may be attached to the first flat mirror to reflect the first polarization component and transmit the second polarization component.

According to an embodiment, the second flat mirror may include: a phase retarder configured to convert the first polarization component into a first circular polarization component; and a second polarizing film attached to reflect the first polarization component and transmit the second polarization component.

According to an embodiment, the concave mirror may transmit the optical signal of the first polarization component emitted from the PGU, the first flat mirror to which the first polarizing film is attached may reflect the transmitted optical signal of the first polarization component, and the concave mirror may transmit the reflected optical signal of the first polarization component again. The second flat mirror to which the phase retarder and the second polarizing film are attached may convert a polarization of a second optical signal of the first polarization component to reflect a second optical signal of the second polarization component, the concave mirror may reflect the second optical signal of the second polarization component, and the reflected second optical signal of the second polarization component may be transmitted through the second flat mirror to pass through the cover.

According to an embodiment, the PGU may be arranged at an inclination angle greater than 90 degrees relative to a horizontal plane, the first flat mirror may be arranged at a first inclination angle greater than 90 degrees relative to the horizontal plane, and the second flat mirror may be arranged at a second inclination angle greater than 90 degrees relative to the horizontal plane. The concave mirror may be arranged at a third inclination angle greater than 90 degrees relative to the horizontal plane. The cover may be arranged at a fourth inclination angle smaller than 90 degrees relative to the horizontal plane.

According to an embodiment, the second inclination angle of the second flat mirror may be greater than the first inclination angle of the first flat mirror, and greater than the third inclination angle of the concave mirror.

According to an embodiment, the second flat mirror may be arranged in an upper region relative to the first flat mirror in a Z-axis direction. A first length of the first flat mirror may be configured to be greater than a second length of the second flat mirror. A third length of the concave mirror may be configured to be greater than the first length of the first flat mirror.

According to an embodiment, the second optical signal inside the windshield may travel toward a center point of the eye-box region at an incidence angle smaller than 90 degrees relative to the horizontal plane. Sunlight outside the windshield may pass through the windshield and the cover at a second incidence angle greater than the incidence angle relative to the horizontal plane to be multiply reflected in a space between the concave mirror and the first flat mirror. The sunlight having been multiply reflected in the space may travel toward a lower region within the dashboard in the Z-axis direction.

According to an embodiment, the imaging device for a vehicle may further include a motor coupled to a rear surface of the second flat mirror and configured to adjust the second inclination angle of the second flat mirror.

An imaging device for a vehicle according to another aspect of the specification includes an image formation device (picture generation unit (PGU)) arranged inside a dashboard of the vehicle and configured to generate an optical signal toward one side; a flat mirror arranged to be apart from the PGU in the first direction to transmit the optical signal; a concave mirror arranged to be apart from the flat mirror in the first direction to reflect the transmitted optical signal; a cover which constitutes an exterior appearance of the dashboard and through which a second optical signal passes, the second optical signal having been multiply reflected between the concave mirror and the flat mirror to be transmitted through the flat mirror. The second optical signal having passed through the cover may display an image in a particular region of the windshield and travel toward an eye-box region of a user.

According to an embodiment, the flat mirror may include a phase retarder configured to convert the first polarization component into a first circular polarization component; and a polarizing film attached to transmit the first polarization component and reflect the second polarization component. The concave mirror may be configured to reflect all polarization components.

According to an embodiment, the flat mirror to which the phase retarder and the polarizing film are attached may transmit an optical signal of the first polarization component to convert the transmitted optical signal into an optical signal of the second polarization component. The concave mirror may reflect the optical signal of the second polarization component, and the flat mirror may reflect the optical signal of the second polarization component, the optical signal having been reflected from the concave mirror. The concave mirror may reflect the optical signal of the second polarization component again, the optical signal having been reflected from the flat mirror, to generate a second optical signal of the second polarization component, and the second optical signal of the second polarization component may be transmitted through the flat mirror to pass through the cover.

According to an embodiment, the PGU may be arranged at an inclination angle greater than 90 degrees relative to a horizontal plane, and the flat mirror may be arranged at a first inclination angle greater than 90 degrees relative to the horizontal plane. The concave mirror may be arranged at a second inclination angle greater than 90 degrees relative to the horizontal plane. The cover may be arranged at a third inclination angle smaller than 90 degrees relative to the horizontal plane.

According to an embodiment, the first inclination angle of the flat mirror may be configured to be greater than the inclination angle of the PGU. The second inclination angle of the concave mirror may be configured to be greater than the inclination angle of the PGU.

According to an embodiment, the flat mirror may be arranged in an upper region relative to the concave mirror in a Z-axis direction. A first length of the flat mirror may be configured to be greater than a length of the PGU. A second length of the concave mirror may be configured to be greater than the length of the PGU.

According to an embodiment, the second optical signal inside the windshield may travel toward a center point of the eye-box region at an incidence angle smaller than 90 degrees relative to the horizontal plane. Sunlight outside the windshield may pass through the windshield and the cover at a second incidence angle greater than the incidence angle relative to the horizontal plane to be multiply reflected in a space between the concave mirror and the flat mirror. The sunlight having been multiply reflected in the space may travel toward a lower region within the dashboard in a Z-axis direction.

According to an embodiment, the imaging device for a vehicle may further include a mirror bench structure arranged in a region between the cover and the windshield and configured to reflect the sunlight, having passed through the windshield, to cause the sunlight to pass through the cover.

Details of other embodiments are included in the detailed description and drawings.

### Advantageous Effects of Invention

Hereinafter, technical features of an imaging device for a vehicle according to the specification, the imaging device having a reduced volume, and a vehicle including the imaging device are summarized.

According to the specification, an imaging device for a vehicle, the imaging device having a reduced volume and configured to avoid sunlight, may be implemented by arranging first and second flat mirrors at one side and another side of a concave mirror, respectively, inside a cover of a dashboard.

According to the specification, an imaging device for a vehicle, the imaging device having a reduced volume and ensuring a field of view (FOV) equal to or greater than a particular angle according to a limited mounting space through a multi-reflection structure, may be implemented by configuring some mirrors to reflect or transmit an optical signal.

According to the specification, an imaging device for a vehicle, the imaging device having a reduced volume and configured to avoid sunlight, may be implemented by configuring a mirror structure to multiply reflect sunlight to thereby cause sunlight having been transmitted through a windshield to travel toward a lower region of the vehicle.

According to the specification, an imaging device for a vehicle, the imaging device having a reduced volume, capable of avoiding sunlight, and having degrees of freedom in angles and positions of optical components, may be implemented through a space secured by multi-overlapping optical paths using two or more selectively transmissive/reflective optical components.

According to the specification, an imaging device for a vehicle, the imaging device having a reduced volume and capable of avoiding sunlight, may be implemented to have a structure without back reflection while achieving volume reduction.

The effects of the specification are not limited to those effects mentioned above, and other effects not mentioned may be clearly understood by those skilled in the art from the description of the appended claims.

### Brief Description of Drawings

FIG. 1 is a view illustrating an exterior appearance of a vehicle according to an embodiment of the specification.
FIG. 2 is a diagram illustrating the vehicle according to an embodiment of the specification, as viewed at various angles from outside.
FIGS. 3 and 4 are diagrams illustrating an interior of the vehicle according to an embodiment of the specification.
FIG. 5 is a block diagram referenced for explaining the vehicle according to an embodiment of the disclosure.
FIG. 6A illustrates a configuration in which a screen of a predetermined ratio is displayed in a particular region of front glass of the vehicle.
FIG. 6B illustrates a structure in which an imaging device for a vehicle, the imaging device configured to implement the screen of the predetermined ratio of FIG. 6A, is arranged inside a dashboard of the vehicle.
FIG. 7 illustrates the imaging device for the vehicle, the imaging device being arranged inside a dashboard of the vehicle according to an embodiment of the specification.
FIG. 8 shows a comparison between arrangement regions according to mirror arrangement structures in the imaging device for the vehicle.
FIG. 9 illustrates a structure in which a first structure of the imaging device for the vehicle, shown in (a) of FIG. 8, is combined with internal components inside the vehicle.
FIG. 10 illustrates a structure in which a motor is coupled to a second flat mirror of the imaging device for the vehicle, shown in (a) of FIG. 8 and FIG. 9, and a structure in which an optical signal is transmitted and reflected.
FIG. 11 illustrates an arrangement structure of an imaging device for a vehicle, the imaging device including a cover having a curved surface structure, and a structure in which an optical signal is transmitted and reflected.
FIG. 12 is a diagram illustrating polarization conversion of optical signals transmitted and reflected from concave mirrors and flat mirrors in the imaging device for a vehicle, shown in FIG. 10 and FIG. 11.
FIG. 13 illustrates an arrangement structure of the imaging device for a vehicle, the imaging device capable of being arranged inside a dashboard of the vehicle according to an embodiment of the specification, and a structure in which an optical signal is transmitted and reflected.
FIG. 14 illustrates polarization components of an optical signal multiply-reflected and transmitted between the concave mirror and the flat mirror each shown in FIG. 12.
FIG. 15 illustrates a structure in which sunlight outside a windshield of the imaging device for a vehicle, shown in FIG. 13, passes through a cover to be multiply reflected inside the dashboard.
FIG. 16 is a block diagram of a vehicle including the imaging device for a vehicle according to the specification.

### Mode for the Invention

A description will now be given in detail according to an embodiment disclosed herein, with reference to the accompanying drawings. For the sake of a brief description with reference to the drawings, the same or equivalent components may be provided with the same reference numbers, and the description thereof will not be repeated. Suffixes "module" and "unit" used for components used in the following description are merely intended for easy description of the specification, and each suffix itself is not intended to give any special meaning or function. In describing an embodiment disclosed herein, moreover, the detailed description will be omitted when specific description for publicly known technologies to which the specification pertains is judged to obscure the gist of the specification. The accompanying drawings are used to help easily understand the technical idea of the specification and it should be understood that the idea of the specification is not limited by the accompanying drawings. The idea of the disclosure should be construed to extend to any alterations, equivalents and substitutes besides the accompanying drawings.

It will be understood that although the terms first, second, etc. may be used herein to describe various elements, these elements should not be limited by these terms. These terms are generally only used to distinguish one element from another.

It will be understood that when an element is referred to as being "connected" or "coupled" to another element, the element may be directly connected or coupled to the another element, or intervening elements may also be present. In contrast, when an element is referred to as being "directly connected with" or "directly coupled to" another element, there are no intervening elements present.

A singular representation may include a plural representation unless it represents a definitely different meaning from the context.

Terms such as "include" or "has" as used herein should be understood that they are intended to indicate the existence of a feature, a number, a step, an element, a component, or a combination thereof disclosed in the specification, and it may also be understood that a possibility of presence or addition of one or more other features, numbers, steps, elements, components, or combinations thereof are not excluded in advance.

A vehicle described in the specification may be a concept including an automobile, a motorcycle, and the like. Hereinafter, with respect to the vehicle, an automobile will be mainly described.

The vehicle described herein may be a concept including any one of an internal combustion engine car having an engine as a power source, a hybrid vehicle having an engine and an electric motor as power sources, an electric vehicle having an electric motor as a power source, and the like.

In the following description, a left side of the vehicle refers to a left side in a driving direction of the vehicle, and a right side of the vehicle refers to a right side in a driving direction of the vehicle.

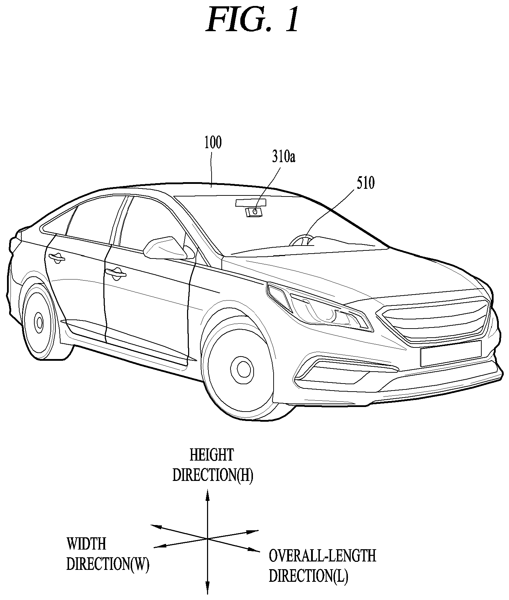

FIG. 1 is a view illustrating an exterior appearance of a vehicle according to an embodiment of the specification.

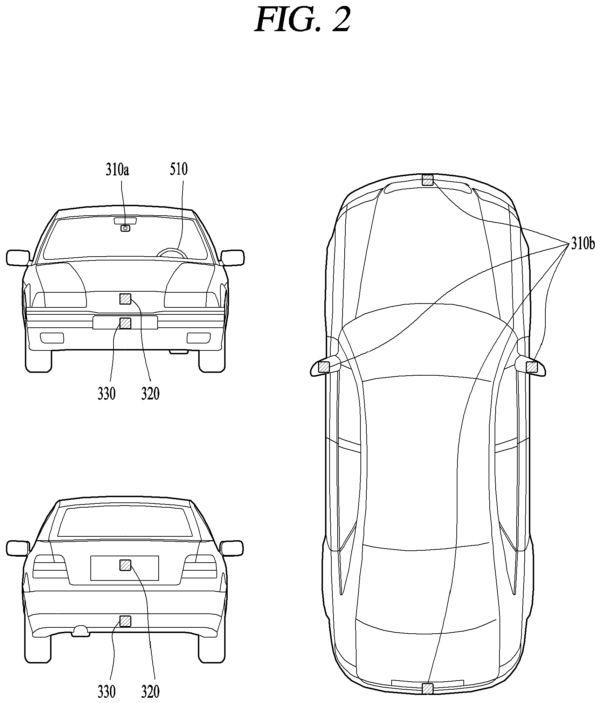

FIG. 2 is a diagram illustrating the vehicle according to an embodiment of the specification, as viewed at various angles from outside.

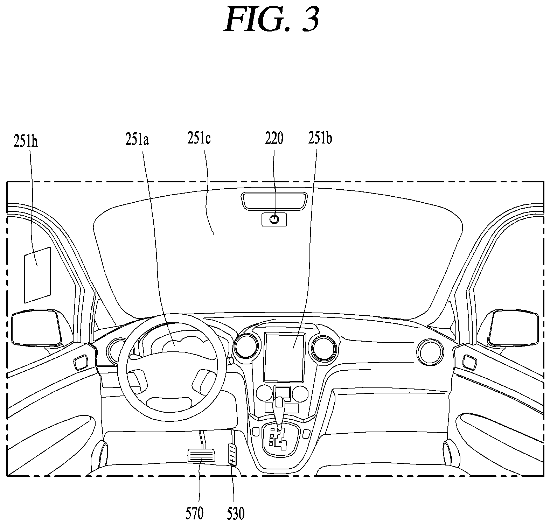

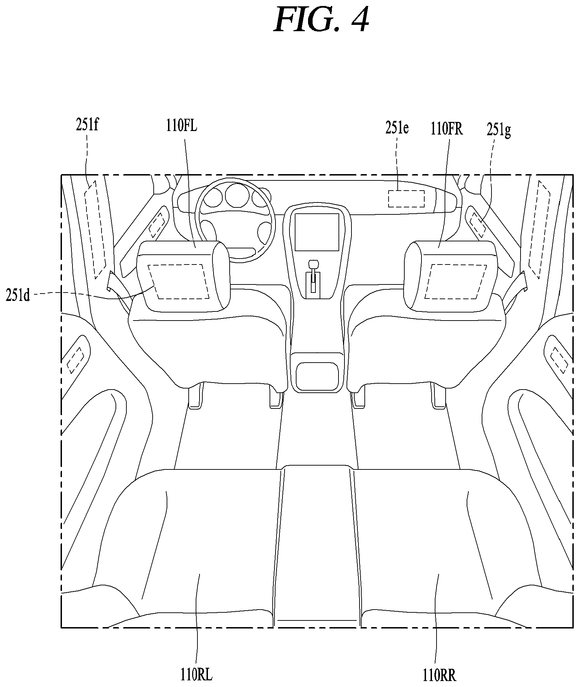

FIGS. 3 and 4 are diagrams illustrating an interior of the vehicle according to an embodiment of the specification.

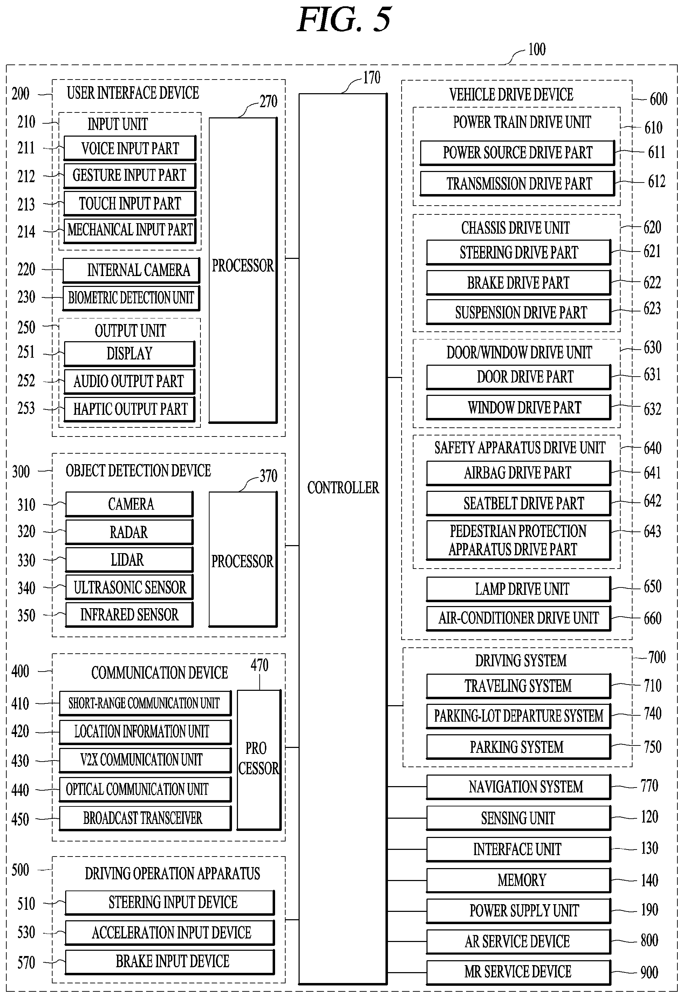

FIG. 5 is a block diagram referenced for explaining the vehicle according to an embodiment of the disclosure.

Referring to FIGS. 1 to 5, a vehicle 100 may include wheels rotated by a power source and a steering input apparatus 510 configured to adjust a driving direction of the vehicle 100.

The vehicle 100 may be an autonomous vehicle.

The vehicle 100 may be switched into an autonomous mode or a manual mode based on a user input.

For example, the vehicle 100 may be converted from the manual mode into the autonomous mode or from the autonomous mode into the manual mode based on a user input received through a user interface device 200.

The vehicle 100 may be switched into the autonomous mode or the manual mode based on driving situation information. The driving situation information may be generated based on object information provided by an object detection device 300.

For example, the vehicle 100 may be switched from the manual mode into the autonomous mode or from the autonomous mode into the manual mode based on the driving situation information generated from the object detection device 300.

For example, the vehicle 100 may be switched from the manual mode into the autonomous mode or from the autonomous mode into the manual mode based on driving situation information received through a communication device 400.

The vehicle 100 may be switched from the manual mode into the autonomous mode or from the autonomous mode into the manual mode based on information, data or a signal provided from an external device.

When the vehicle 100 is driven in the autonomous mode, the vehicle 100 may be driven based on a driving system 700.

For example, the autonomous vehicle 100 may be driven based on information, data or a signal each generated in a traveling system 710, a parking-lot departure system 740, and a parking system 750.

When the vehicle 100 is driven in the manual mode, the autonomous vehicle 100 may receive a user input for driving through a driving operation device 500. The vehicle 100 may be driven based on the user input received through the driving operation device 500.

An overall length refers to a length from a front portion to a rear portion of the vehicle 100, an overall width refers to a width of the vehicle 100, and an overall height refers to a length from lower portions of wheels to a roof. Hereinafter, an overall length direction L may refer to a direction which is a reference for measuring the overall length of the vehicle 100, an overall width direction W may refer to a direction which is a reference for measuring the overall width of the vehicle 100, and an overall height direction H may refer to a direction which is a reference for measuring the overall height of the vehicle 100.

As illustrated in FIG. 5, the vehicle 100 may include the user interface device 200, the object detection device 300, the communication device 400, the driving operation device 500, a vehicle drive device 600, the driving system 700, a navigation system 770, a sensing unit 120, an interface unit 130, a memory 140, a controller 170, and/or a power supply unit 190.

According to an embodiment, the vehicle 100 may further include other components in addition to components to be explained in the specification or may not include some of the components to be explained in the specification.

The user interface device 200 is a device for communication between the vehicle 100 and a user. The user interface device 200 may receive a user input and provide information generated by the vehicle 100 to the user. The vehicle 100 may implement user interfaces (UIs) or user experiences (UXs) through the user interface device 200.

The user interface device 200 may include an input unit 210, an internal camera 220, a biometric detection unit 230, an output unit 250, and a processor 270.

According to an embodiment, the user interface device 200 may further include other components in addition to components to be explained herein or may not include some of the components to be explained herein.

The input unit 200 is configured to receive information from the user, and data collected from the input unit 120 may be analyzed by the processor 270 and processed by a control command by the user.

The input unit 200 may be arranged inside the vehicle. For example, the input unit 200 may be arranged in one region of a steering wheel, one region of an instrument panel, one region of a seat, one region of each pillar, one region of a door, one region of a center console, one region of a headlining, one region of a sun visor, one region of a windshield, one region of a window, or the like.

The input unit 200 may include a voice input part 211, a gesture input part 212, a touch input part 213, and a mechanical input part 214.

The voice input part 211 may convert a voice input of the user into an electrical signal. The electrical signal, obtained by the converting, may be provided to the processor 270 or the controller 170.

The voice input part 211 may include one or more microphones.

The gesture input part 212 may convert a gesture input of the user into an electrical signal. The electrical signal, obtained by the converting, may be provided to the processor 270 or the controller 170.

The gesture input part 212 may include at least one from among an infrared sensor and an image sensor each configured to detect a gesture input of the user.

According to an embodiment, the gesture input part 212 may detect a three-dimensional (3D) gesture input of the user. Thus, the gesture input part 212 may include a light output part configured to output a plurality of pieces of infrared light or a plurality of image sensors.

The gesture input part 212 may detect a 3D gesture input of the user through a time of flight (TOF) method, a structured light method, or a disparity method.

The touch input part 213 may convert a touch input of the user into an electrical signal. The electrical signal, obtained by the converting, may be provided to the processor 270 or the controller 170.

The touch input part 213 may include a touch sensor configured to detect a touch input of the user.

According to an embodiment, the touch input part 213 may be arranged integrally with a display 251 to implement a touch screen. Such a touch screen may provide an input interface and an output interface between the vehicle 100 and the user together.

The mechanical input part 214 may include at least one from among a button, a dome switch, a jog wheel, and a jog switch. An electrical signal generated by the mechanical input part 214 may be provided to the processor 270 or the controller 170.

The mechanical input part 214 may be arranged in a steering wheel, a center fascia, a center console, a cockpit module, a door, or the like.

The internal camera 220 may obtain an image of an interior of the vehicle. The processor 270 may detect a state of the user based on the image of the interior of the vehicle. The processor 270 may obtain gaze information of the user from the image of the interior of the vehicle. The processor 270 may detect a gesture of the user from the image of the interior of the vehicle.

The biometric detection unit 230 may acquire biometric information of the user. The biometric detection unit 230 may include a sensor configured to acquire the biometric information of the user, and acquire fingerprint information and heart rate information of the user using the sensor. The biometric information may be used for user authentication.

The output unit 250 is configured to generate output related to sight, hearing, or touch.

The output unit 250 may include at least one from among the display 251, an audio output part 252, and a haptic output part 253.

The display 251 may output graphic objects corresponding to various types of information.

The display 251 may include at least one from among a liquid crystal display (LCD), a thin film transistor-liquid crystal display (TFT-LCD), an organic light emitting diode (OLED), a flexible display, a 3-dimensional (3D) display, and an e-ink display.

The display 251 may constitute an inter-layered structure with the touch input part 213 or be arranged integrally therewith to implement a touch screen.

The display 251 may be implemented as a head-up display (HUD), a center information display (CID), an instrument cluster, and/or rear seat entertainment (RSE). When the display 251 is implemented as the HUD, the display 251 may include a projecting module to output information through an image projected on the windshield or the window.

The display 251 may include a transparent display. The transparent display may be attached to the windshield or the window.

The transparent display may have a predetermined degree of transparency and display a predetermined screen thereon. To have transparency, the transparent display may include at least one from among a transparent thin film electroluminescent (TFEL) display, a transparent organic light-emitting diode (OLED), a transparent liquid crystal display (LCD), a transmissive transparent display, and a transparent light-emitting diode (LED) display. The transparent display may have adjustable transparency.

Meanwhile, the user interface device 200 may include a plurality of displays 251a to 251g.

The display 251 may be arranged on one region of a steering wheel, one region 521a, 251b, or 251e of an instrument panel, one region 251d of a seat, one region 251f of each pillar, one region 251g of a door, one region of a center console, one region of a headlining, or one region of a sun visor, or implemented on one region 251c of the windshield or one region 251h of the window.

Driving-related information for the driver may be displayed on the one regions 251a and 251b of the instrument panel. A personal infotainment display may be implemented in the one region 251e of the instrument panel by an imaging device for a vehicle, the imaging device for a passenger seated in a passenger seat. The personal infotainment display may be implemented in the one region 251d of the seat by the imaging device for a vehicle for rear seat entertainment (RSE).

The audio output part 252 converts an electrical signal provided from the processor 270 or the controller 170 into an audio signal and outputs the audio signal. Thus, the audio output part 252 may include one or more speakers.

The haptic output part 253 generates a tactile output. For example, the haptic output part 253 may operate to vibrate the steering wheel, a safety belt, a seat 110FL, 110FR, 110RL, or 110RR to allow the user to recognize such output.

The processor 270 may control an overall operation of each unit of the user interface device 200.

According to an embodiment, the user interface device 200 may include a plurality of processors 270 or may not include any processor 270.

When the processor 270 is not included in the user interface device 200, the user interface device 200 may operate according to a control by a processor of another device within the vehicle 100 or the controller 170.

Meanwhile, the user interface device 200 may be referred to as a display device for a vehicle.

The user interface device 200 may operate according to control by the controller 170.

The object detection device 300 is a device configured to detect objects located outside the vehicle 100.

The objects may be various entities relevant to driving of the vehicle 100.

Hereinafter, the imaging device for a vehicle according to the specification is to be described. In this regard, a display for a vehicle, the display showing various driving information, is located below a forward line of sight of a driver, thereby affecting driving safety (rubber necking). Therefore, recently, like a head-up display (HUD), the display for a vehicle may be mounted on a vehicle equipped with the imaging device for a vehicle to ensure driving safety by implementing an image on a windshield on a front side of the vehicle in close proximity to a field of view for driving.

In addition, an infotainment device configured to provide personal information and personal entertainment content needs to be implemented in a passenger seat or a rear seat of the vehicle. Therefore, there is a need to provide the imaging device for a vehicle, the imaging device being configured to display driving-related information in a region in front of the driver's seat or provide personal entertainment content in a region in front of the passenger seat or the rear seat.

To display such driving-related information or entertainment content on a particular region of a windshield on a front side of the vehicle, configuration needs to be performed to have a large aspect ratio in which a width in one axial direction is greater than a length in another axial direction by a certain ratio or more. There is a problem in that a structure of the imaging device for a vehicle and a part of the vehicle in which the imaging device is to be provided for configuring a screen having such a large aspect ratio have not been specifically proposed.

To solve this problem, an objective of the specification is to provide an imaging device for a vehicle, the imaging device having a large aspect ratio, using a projection optical system related to the vehicle. In addition, an objective of the specification is to display driving-related information on a screen having a large aspect ratio in a particular region of a windshield on a front side of the vehicle. In addition, an objective of the specification is to provide an imaging device for a vehicle, the imaging device having an optical structure and a special screen for allowing an image to have a large aspect ratio using a single imaging module. In addition, an objective of the specification is to implement continuous images associated with driving-related information to have a large aspect ratio using a single image module. In addition, an objective of the specification is to provide an imaging device for a vehicle with a small and thin volume.

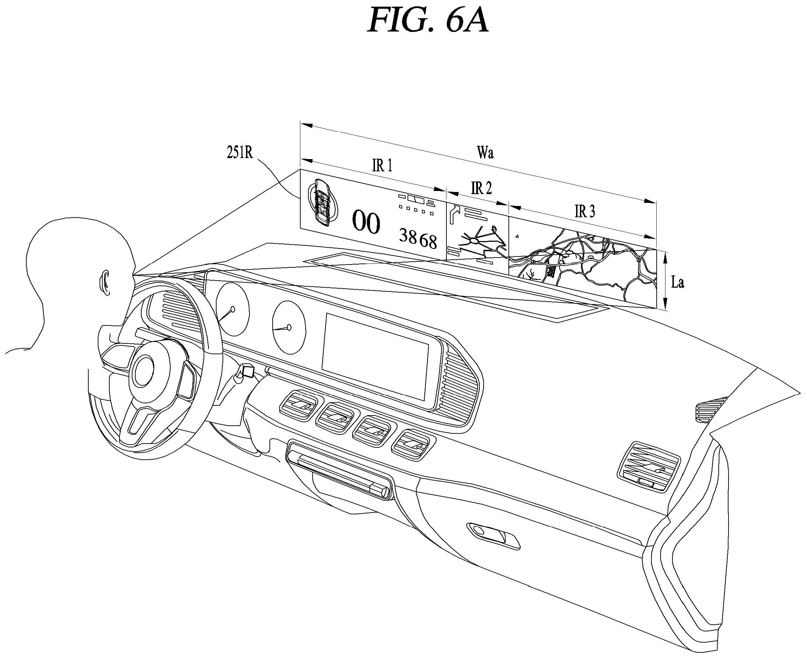

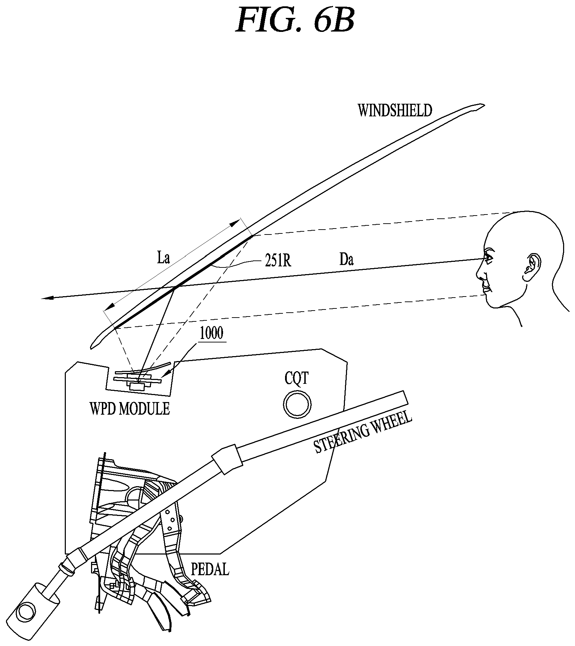

An imaging device for a vehicle, the imaging device configured to achieve the aforementioned objectives, is described in detail with reference to the drawings. In this regard, FIG. 6A illustrates a configuration in which a screen of a predetermined ratio is displayed in a particular region of front glass of a vehicle. FIG. 6B illustrates a structure in which the imaging device for a vehicle, the imaging device configured to implement the screen of the predetermined ratio of FIG. 6A, is arranged inside a dashboard of the vehicle.

Referring to FIG. 6A, an image having a width Wa in one axis direction and a length La in another axis direction may be displayed on a particular region 251R of a windshield of the vehicle. The image may be configured to include a plurality of image regions in which information needed to drive a vehicle is displayed. The plurality of image regions may include a first image region IR1 to a third image region IR3. A first image including vehicle-related information may be displayed in the first image region IR1 closest to a field of view of a driver of the vehicle. A second image related to a driving path of the vehicle may be displayed in the second image region IR2. A third image related to a map including a departure point and a destination may be displayed in the third image region IR3. As the plurality of images are displayed in the particular region 251R, the width Wa in the one axis direction may be set to be greater than the length La in another axial direction by a predetermined ratio, for example, five times or more.

Referring to FIGS. 6A and 6B, an imaging device 1000 for a vehicle may be arranged inside a dashboard of the vehicle. The imaging device 1000 for the vehicle may be arranged in a particular region inside the dashboard not to overlap a region in which a steering wheel and pedals are arranged. An image generated by light reflected from a screen panel 1200 constituting the imaging device 1000 for the vehicle may be displayed on the particular region 251R of the windshield of the vehicle. The particular region 251R may be implemented to have the predetermined length La so that an image is displayed within a field of view of the driver. A distance from a center of a line of sight of the driver to a center of the particular region 251R may be implemented as a predetermined distance Da.

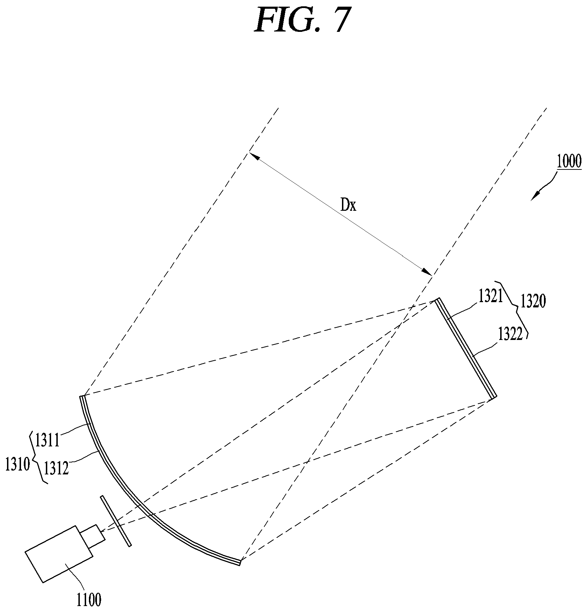

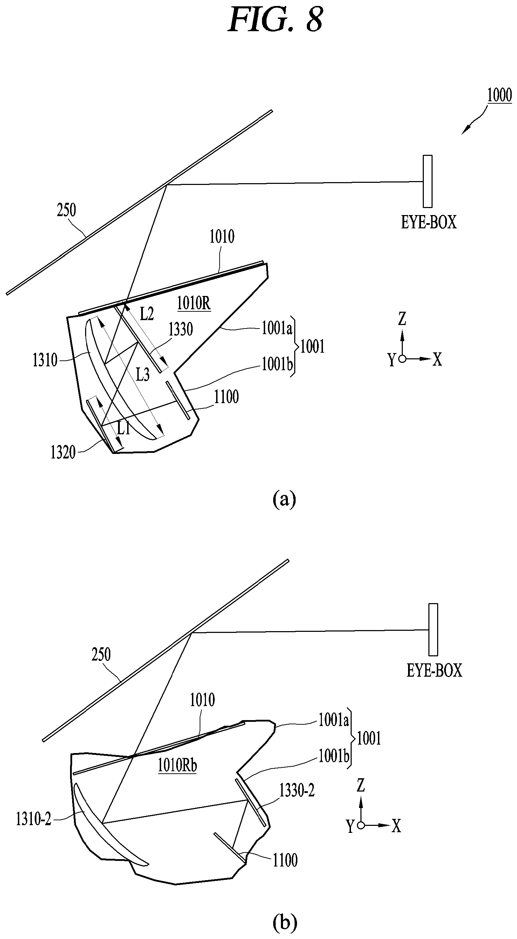

In this regard, an imaging device for a vehicle, the imaging device arranged inside a dashboard of the vehicle according to an embodiment of the specification, is described. In this regard, FIG. 7 illustrates an imaging device for a vehicle, the imaging device being arranged inside a dashboard of the vehicle according to an embodiment of the specification. Meanwhile, FIG. 8 shows a comparison between arrangement regions according to mirror arrangement structures in an imaging device for a vehicle.

Referring to FIG. 7, the imaging device 1000 for the vehicle may be configured to include an image formation device (picture generation unit (PGU)) 1100, a concave mirror 1310, and a first flat mirror 1320. The concave mirror 1310 may be arranged in a first region adjacent to the picture generation unit (PGU) 1100. The first flat mirror 1320 may be arranged in a second region spaced apart from the concave mirror 1310.

The concave mirror 1310 may include a concave mirror region 1311 having a concave shape and a polarizing film 1312 arranged in the concave mirror region 1311. The polarizing film 1312 may also have a concave shape to correspond to the concave shape of the concave mirror region 1311. The first flat mirror 1320 may include a first flat mirror region 1321 having a planar shape and a first polarizing film 1322 arranged in the first flat mirror region 1321. The first polarizing film 1322 may also have a planar shape to correspond to the planar shape of the first flat mirror region 1321.

An optical signal having been emitted at a wide angle within a predetermined angle range from the picture generation unit (PGU) 1100 may pass through the concave mirror 1310 to be reflected from the first flat mirror 1320. The optical signal having been emitted from the picture generation unit (PGU) 1100 may be reflected from a whole region of the first flat mirror 1320. The optical signal having been reflected from the first flat mirror 1320 may be reflected from a whole region of the concave mirror 1310. The optical signal having been reflected from the concave mirror 1310 may define an optical signal region within a predetermined range Dx to display an image.

(a) of FIG. 8 illustrates a first structure of the imaging device 1000 for the vehicle, the first structure having the picture generation unit (PGU) 1100, the concave mirror 1310, the first flat mirror 1320, and a second flat mirror 1330 arranged in a first region 1010R inside a cover 1010. An optical signal having been emitted from the picture generation unit (PGU) 1100 passes through the concave mirror 1310 to be reflected from the first flat mirror 1320. The optical signal having been reflected from the first flat mirror 1320 passes through the concave mirror 1310 to be reflected from the second flat mirror 1330. The optical signal having been reflected from the second flat mirror 1330 is reflected from the concave mirror 1310 and passes through the second flat mirror 1330 and the cover 1010 to be steered toward a windshield 250. A HUD image having been steered toward the windshield 250 is displayed in an eye-box region of a user.

(b) of FIG. 8 illustrates a second structure of an imaging device 1000b for a vehicle, the second structure having the picture generation unit (PGU) 1100, a concave mirror 1310-2, and a flat mirror 1330-2 arranged in a second region 1020R inside the cover 1010. An optical signal having been emitted from the picture generation unit (PGU) 1100 is reflected from the flat mirror 1330-2. The optical signal having been reflected from the flat mirror 1330-2 is reflected from the concave mirror 1310-2 and passes through the cover 1010 to be steered toward the windshield 250. A HUD image having been steered toward the windshield 250 is displayed in an eye-box region of a user.

The first structure of the imaging device 1000 for the vehicle, shown in (a) of FIG. 8 and having the first and second flat mirrors 1320 and 1330 arranged at one side and another side of the concave mirror 1310, respectively, may be arranged within the first region 1010R inside the cover 1010 to thereby have a reduced volume. Meanwhile, the second structure of the imaging device 1000b for the vehicle, shown in (b) of FIG. 8 and having the concave mirror 1310-2 and the flat mirror 1330-2 arranged at one side and another side of the picture generation unit (PGU) 1100, respectively, is arranged within the second region 1010R inside the cover 1010 to thereby have an increased volume. The volume of the second region 1010R of the second structure of the imaging device 1000b for the vehicle is increased compared to the volume of the first region 1010R inside the first structure of the imaging device 1000 for the vehicle.

Accordingly, the first structure of the imaging device 1000 for the vehicle, shown in (a) of FIG. 8, may maximize a volume reduction effect by implementing overlapping between optical paths using polarization with two components rather than a single component. In this regard, as the overlapping between the optical paths using polarization occurs in a region between the concave mirror 1310 and the second flat mirror 1330, the volume reduction effect may be maximized. In addition, since arrangement angles between optical components are parallel with each other, sunlight having been back-reflected is not directed upward, thereby providing an effect of avoiding back reflection.

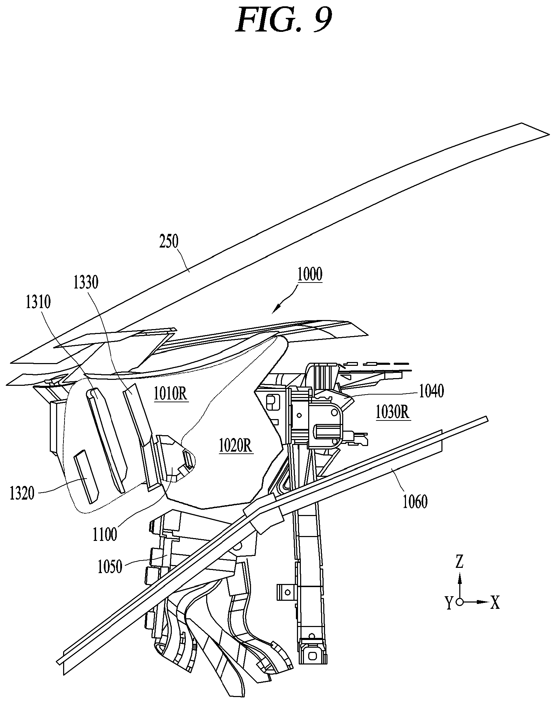

FIG. 9 illustrates a structure in which the first structure of the imaging device for the vehicle, shown in (a) of FIG. 8, is combined with internal components inside the vehicle. Referring to FIGS. 8 and 9, the first structure of the imaging device 1000 for the vehicle may be arranged within the first region 1010R inside the cover 1010 to have a reduce volume compared to that of the second structure arranged in the second region 1020R inside the cover 1010.

A frame 1040, a brake structure 1050, and a steering wheel structure 1060, each included in the vehicle, may be arranged in a third region 1030R which is a region outside the first region 1010R. The first frame 1040 of the vehicle is a frame configured such that the imaging device 1000 for the vehicle may be assembled into the vehicle. The frame 1040 may be a frame coupled to one side of a body constituting an exterior appearance of the imaging device 1000 for the vehicle which is arranged in the first region 1010R. The frame 1040 is combined with a HUD corresponding to the imaging device for the vehicle, and thus, may be referred to as a HUD frame.

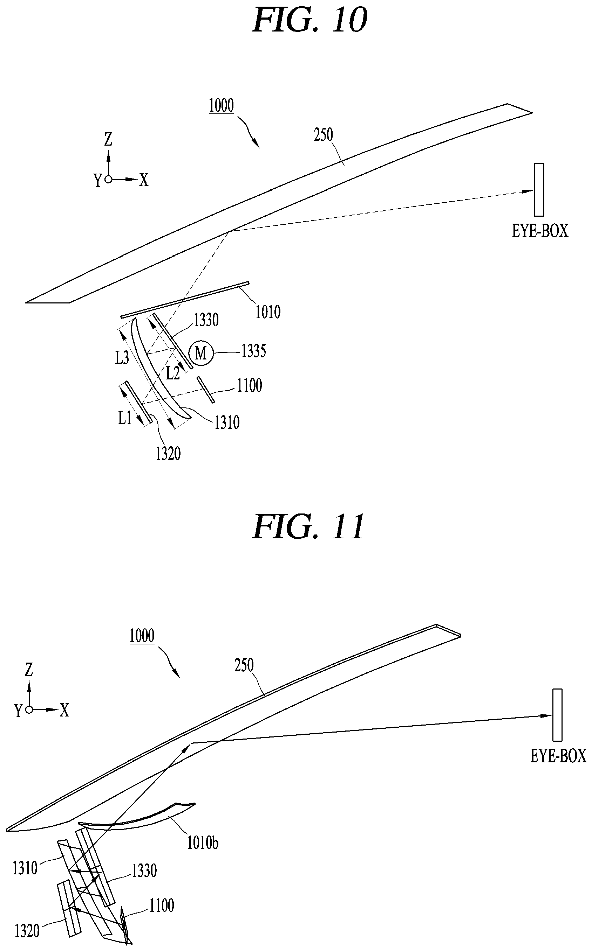

Meanwhile, at least one mirror in the imaging device for the vehicle according to the specification may be coupled to a motor to change an arrangement angle. In this regard, FIG. 10 illustrates a structure in which a motor is coupled to the second flat mirror of the imaging device for the vehicle, shown in (a) of FIG. 8 and FIG. 9, and a structure in which an optical signal is transmitted and reflected.

Referring to (a) of FIG. 8, FIG. 9 and FIG. 10, the imaging device 1000 for the vehicle may be configured to include the picture generation unit (PGU) 1100, the concave mirror 1310, the first flat mirror 1320, and the second flat mirror 1330. The imaging device 1000 for the vehicle may be configured to further include the cover 1010 and the windshield 250.

The concave mirror 1310 may be arranged in a first region which is adjacent to the picture generation unit (PGU) 1100 in one side direction. The first flat mirror 1320 may be arranged in a second region which is spaced apart from the concave mirror 1310 in the one side direction. The second flat mirror 1330 may be arranged in a region which is adjacent to the picture generation unit (PGU) 1100 in an upper direction of a z-axis.

An optical signal having been emitted from the picture generation unit (PGU) 1100 may pass through the concave mirror 1310 and be reflected from the first flat mirror 1320. The optical signal having been reflected from the first flat mirror 1320 may be reflected from the second flat mirror 1330 and the concave mirror 1310. The optical signal having been reflected from the concave mirror 1310 may pass through the second flat mirror 1330 and the cover 1010 and be steered toward the windshield 250 to display an image. Accordingly, an image of the optical signal steered toward the windshield 250 may be displayed in an eye-box region of a user.

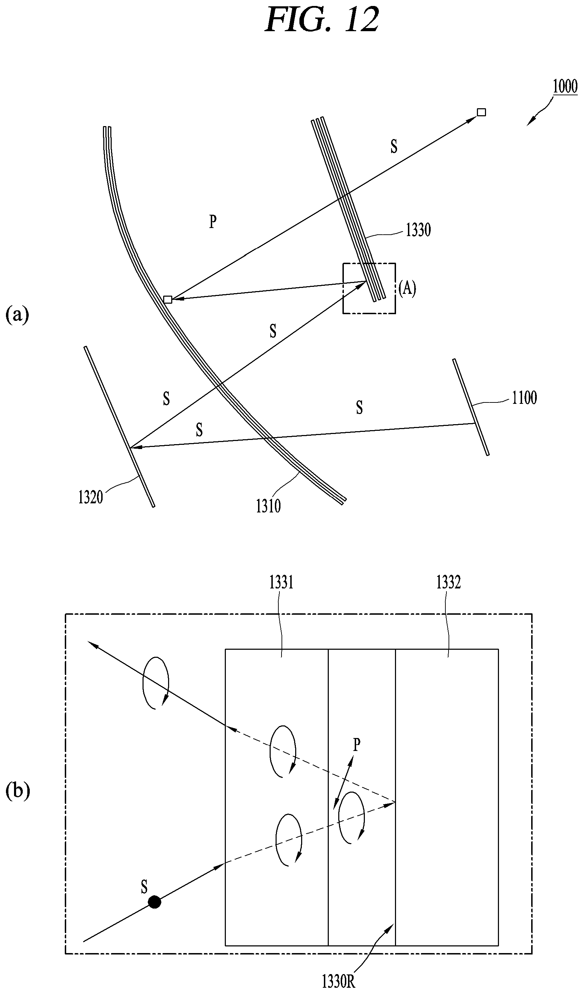

Meanwhile, a cover of an imaging device for a vehicle according to the specification may have a curved surface structure. In this regard, FIG. 11 illustrates an arrangement structure of an imaging device for a vehicle, the imaging device including a cover having a curved surface structure, and a structure in which an optical signal is transmitted and reflected. FIG. 12 is a diagram illustrating polarization conversion of optical signals transmitted and reflected from concave mirrors and flat mirrors in the imaging device for the vehicle, shown in FIG. 10 and FIG. 11.

Referring to FIG. 10 and FIG. 12, the imaging device 1000 for the vehicle may be configured to include the picture generation unit (PGU) 1100, the concave mirror 1310, the first flat mirror 1320, and the second flat mirror 1330. The imaging device 1000 for the vehicle may be configured to further include a cover 1010b having a curved surface shape and the windshield 250.

The imaging device 1000 for the vehicle may be arranged within the first region 1010R inside the cover 1010b. The picture generation unit (PGU) 1100, the concave mirror 1310, the first flat mirror 1320, and the second flat mirror 1330 may be arranged in an inner region 1000R of the cover 1010b.

The concave mirror 1310 may be arranged in the first region which is adjacent to the picture generation unit (PGU) 1100 in the one side direction. The first flat mirror 1320 may be arranged in the second region which is spaced apart from the concave mirror 1310 in the one side direction. The second flat mirror 1330 may be arranged in a region which is adjacent to the picture generation unit (PGU) 1100 toward an upper direction of the z-axis.

An optical signal having been emitted from the picture generation unit (PGU) 1100 may pass through the concave mirror 1310 and be reflected from the first flat mirror 1320. The optical signal having been reflected from the first flat mirror 1320 may be reflected from the second flat mirror 1330 and the concave mirror 1310. The optical signal having been reflected from the concave mirror 1310 may pass through the second flat mirror 1330 and the cover 1010b having a curved surface and be steered toward the windshield 250 to display an image. Accordingly, an image of the optical signal steered toward the windshield 250 may be displayed in an eye box region of a user. As the optical signal passes through the cover 1010b having a curved surface, an image region of the optical signal which is displayed on the windshield 250 may be changed.

In this regard, as the optical signal passes through the cover 1010b having a curved surface, the image region of the optical signal which is displayed on the windshield 250 may be changed to be increased or decreased. On the cover 1010b in which a central portion has a concave form on the z-axis compared to a peripheral portion, the image region of the optical signal may be expanded compared to a cover having a planar shape. Meanwhile, on a cover in which a central portion has a more convex form on the z-axis than a peripheral portion, an image region of an optical signal may be narrower compared to a cover having a planar shape.

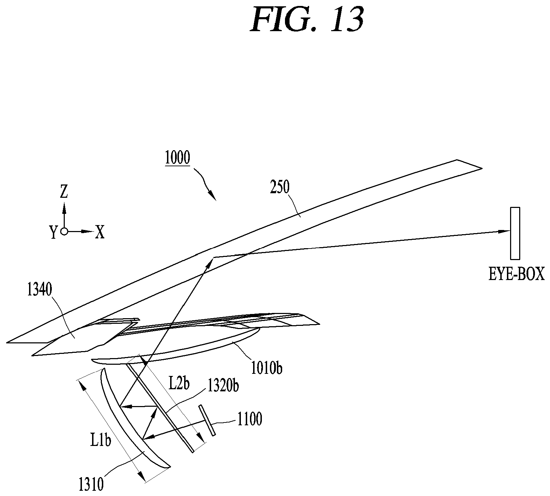

Referring to (a) of FIG. 13, an optical signal having been emitted from the picture generation unit (PGU) 1100 may pass through the concave mirror 1310, be reflected from the first flat mirror 1320, and pass through the concave mirror 1320. The optical signal having passed through the concave mirror 1310, been reflected from the first flat mirror 1320, and then, passed through the concave mirror 1320 may be in an S-polarized state. The optical signal in the S-polarized state may be reflected from the second flat mirror 1330, and then, converted into an optical signal in a P-polarized state. The optical signal in the P-polarized state which has been reflected from the second flat mirror 1330 may be reflected from the concave mirror 1310, and then, pass through the second flat mirror 1330. The optical signal in the P-polarized state may pass through the second flat mirror 1330 to be converted into an optical signal in an S-polarized state.

(b) of FIG. 13 is an enlarged view of a partial region of the second flat mirror 1330 of (a) of FIG. 13. Referring to (b) of FIG. 13, the second flat mirror 1330 may be configured to include a phase retarder 1331 and a second polarizing film 1332. Referring to FIG. 12, the phase retarder 1331 may be configured to convert a first polarization component into a first circular polarization component. The phase retarder 1331 may be implemented as a quarter-wave plate (QWP) configured to convert the first polarization component (e.g., S-polarization) into the first circular polarization component (e.g., left-hand circular polarization). The first circular polarization component may be reflected from a reflective surface 1330R of the second flat mirror 1330 to be converted into a second circular polarization component (e.g., right-hand circular polarization). The second circular polarization component, having been reflected, may be converted into a second polarization component (e.g., P-polarization) by passing through the phase retarder 1331 again.

Hereinafter, with reference to FIGS. 7 to 13, the imaging device 1000 for the vehicle according to this specification is described. The picture generation unit (PGU) 1100 of the imaging device 1000 for the vehicle may be implemented as projection devices. The imaging device 1000 for the vehicle may be configured to include the cover 1010, the picture generation unit (PGU) 1100, the concave mirror 1310, the first flat mirror 1320, and the second flat mirror 1330.

The picture generation unit (PGU) 1100 may be arranged inside a dashboard 1001 of the vehicle. The picture generation unit 1100 may be arranged to generate an optical signal toward one side. The picture generation unit 1100 includes various projection devices and a display configured to display pixels on a screen. The picture generation unit 1100 may be implemented as a liquid crystal display (LCD), an organic light-emitting diode (OLED), digital light processing (DLP), liquid crystal on silicon (LCoS), or a micro light-emitting diode (LED). The picture generation unit (PGU) 1100 includes various projection devices and a display configured to display pixels on the screen. An image ray emitted from the picture generation unit (PGU) 1100 may be emitted as a linearly polarized signal.

The concave mirror 1310 may be arranged to be apart from the PGU 1100 to transmit an optical signal from the PGU 1100. The polarizing film 1312 may be arranged on at least one surface of the concave mirror 1310. The polarizing film 1312 may be configured to selectively transmit or reflect the optical signal depending on a polarization component of the optical signal from the PGU 1100. The polarizing film 1312, on which a coating or linear polarization is provided, may be applied so that the concave mirror 1310 performs the selective transmission and reflection.

The first flat mirror 1320 may be arranged to be apart from the concave mirror 1310 in a first direction of an X-axis to reflect the transmitted optical signal. A linear polarization coating, a film, or a mirror coating may be applied to the first flat mirror 1320 to reflect the optical signal having been transmitted by the concave mirror 1310.

The second flat mirror 1330 may be arranged to reflect a second optical signal, which is a signal obtained as the optical signal having been reflected from the first flat mirror 1320 is transmitted through the concave mirror 1310 again. The second flat mirror 1330 may be arranged to be apart from the concave mirror 1310 in a second direction of the X-axis so that the reflected second optical signal is directed toward the concave mirror 1310. The second direction of the X-axis is a positive X-axis direction, and corresponds to a direction opposite to a negative X-axis direction that is the first direction of the X-axis. A half-mirror structure may be applied to the concave mirror 1310 and the second flat mirror 1330 to enable selective transmission/reflection.

The cover 1010 may constitute an exterior appearance (front surface) of the dashboard 1001. The cover 1010 may be implemented as a dust cover capable of preventing inflow of foreign substances, dust, and the like from outside. The cover 1010 is not limited to a planar structure. Therefore, the cover may have a curved surface structure to avoid back reflection of external sunlight according to arrangement of a mirror bench provided by an original equipment manufacturer (OEM).

The cover 1010 may be made of a non-metallic dielectric material to cause the second optical signal reflected from the concave mirror 1310, and then, transmitted through the second flat mirror 1330 to pass therethrough. The second optical signal having passed through the cover 1010 may display an image in the particular region 251R of the windshield 250 and proceed to an eye-box region of a user.

The polarizing film 1312 may be attached to the concave mirror 1310 to transmit a first polarization component and reflect a second polarization component. For example, the first polarization component may be an S-polarization component and the second polarization component may be a P-polarization component, but are not limited thereto and may be any different orthogonal polarization components. The first polarizing film 1322 may be attached to the first flat mirror 1320 to reflect the first polarization component and transmit the second polarization component.

The second flat mirror 1330 may be configured to include the phase retarder 1331 and the second polarizing film 1332. The phase retarder 1331 may be configured to convert the first polarization component into the first circular polarization component. The phase retarder 1331 may be implemented as a quarter-wave plate (QWP) configured to convert the first polarization component (e.g., S-polarization) into the first circular polarization component (e.g., left-hand circular polarization). The first circular polarization component may be reflected from the reflective surface 1330R of the second flat mirror 1330 to be converted into the second circular polarization component (e.g., right-hand circular polarization). The second circular polarization component, having been reflected, may be converted into the second polarization component (e.g., P-polarization) by passing through the phase retarder 1331 again.

The second polarizing film 1332 may be attached to reflect one component among the first and second polarization components and transmit another component thereof. The second polarizing film 1332 may be attached to reflect the first polarization component and transmit the second polarization component. The second polarizing film 1332 may be attached between the second flat mirror 1330 and the phase retarder 1331.

The concave mirror 1310 may transmit an optical signal of the first polarization component emitted from the PGU 1100. The first flat mirror 1320 to which the first polarizing film 1322 is attached may reflect the transmitted optical signal of the first polarization component. As another example, the first flat mirror 1320 may be also implemented without a polarizing film to reflect optical signals of all polarization components.

The concave mirror 1310 to which the polarizing film 1311 is attached may transmit the reflected optical signal of the first polarization component again. The second flat mirror 1320 to which the phase retarder 1331 and the second polarizing film 1332 are attached may reflect a second optical signal of the second polarization component by converting a polarization of the optical signal of the first polarization component.

As described above, the phase retarder 1331 may be implemented as a quarter-wave plate (QWP) configured to convert the first polarization component (e.g., S-polarization) into the first circular polarization component (e.g., left-hand circular polarization). The first circular polarization component may be reflected from the reflective surface 1330R of the second flat mirror 1330 to be converted into the second circular polarization component (e.g., right-hand circular polarization). The second circular polarization component, having been reflected, may be converted into the second polarization component (e.g., P-polarization) by passing through the phase retarder 1331 again.

The concave mirror 1310 to which the polarizing film 1311 is attached may reflect a second optical signal of the second polarization component. The reflected second optical signal of the second polarization component may pass through the cover 1010 by being transmitted through the second flat mirror 1330 to which the second polarizing film 1332 is attached.

The PGU 1100 may be arranged at an inclination angle greater than 90 degrees relative to a horizontal plane (X-axis). The first flat mirror 1320 may be arranged at a first inclination angle greater than 90 degrees relative to the horizontal plane (X-axis). The second flat mirror 1330 may be arranged at a second inclination angle greater than 90 degrees relative to the horizontal plane (X-axis). The concave mirror 1310 may be arranged at a third inclination angle greater than 90 degrees relative to the horizontal plane (X-axis). Accordingly, a length, along the X-axis, of the imaging device 1000 for the vehicle including the PGU 1100, the concave mirror 1310, the first flat mirror 1320, and the second flat mirror 1330 may be reduced, thereby decreasing a whole volume thereof.

The cover 1010 or 1010b may be arranged at a fourth inclination angle smaller than 90 degrees relative to the horizontal plane (X-axis). In this regard, a cross-sectional shape thereof may be implemented as that of the cover 1010 having a straight-line structure as shown in FIG. 10, or as that of the cover 1010b having a curved line (streamlined) structure as shown in FIG. 11.

The second inclination angle of the second flat mirror 1320 may be configured to be greater than the first inclination angle of the first flat mirror 1320 to reduce a length, on the X-axis, between the first and second flat mirrors 1320 and 1330. The second inclination angle of the second flat mirror 1320 may be configured to be greater than the third inclination angle of the concave mirror 1320 to shorten multiple reflection paths of an optical signal. Additionally, the second inclination angle of the second flat mirror 1320 may be configured to be greater than the third inclination angle of the concave mirror 1320 to cause sunlight introduced into the dashboard 1001 to be directed toward a lower region, on the Z-axis, of the dashboard 1001.

The second flat mirror 1330 may be arranged in an upper region relative to the first flat mirror 1320 in a direction of the Z-axis. In this regard, the PGU 1100 may be arranged in a lower region relative to the second flat mirror 1330. An optical signal from the PGU 1100 may be reflected from the first flat mirror 1320 in a lower region along the Z-axis direction, transmitted through the concave mirror 1310, and then, reflected from the second flat mirror 1330 in an upper region along the Z-axis direction. Therefore, by arranging the first and second flat mirrors 1320 and 1330 only in desired regions, diffuse reflection of unwanted reflection components due to some reflection components in the concave mirror 1310 may be prevented.

A second length L2 of the second flat mirror 1330 may be configured to be greater than a first length L1 of the first flat mirror 1320. Since the first flat mirror 1320 has a single reflection structure, the first flat mirror 1320 has the first length L1 which is a smallest length. The second flat mirror 1330 has a reflection and transmission structure according to a polarization component, and thus, has the second length L2 that is greater than the first length L1. A third length L3 of the concave mirror 1310 may be configured to be greater than the second length L2 of the second flat mirror 1330. The concave mirror 1310 has a multiple transmission structure and a single reflection structure, and thus, has the third length L3 which is a greatest length.

In a vehicle equipped with the imaging device for a vehicle according to the specification, the windshield 250 may be arranged on a frame of the vehicle to protect a driver from an external environment and secure a field of view. A posture of each optical component of the imaging device for the vehicle may be changed according to mounting spaces of the windshield 250 and the HUD, and a virtual image distance and a field of view (FOV) may also be changed as required. The windshield 250 may be configured to have a wedge structure capable of reducing a dual image according to linear diode arrays (LDA).

The imaging device for a vehicle according to the specification has a sunlight avoidance structure. In this regard, a description will be given of steering of the second optical signal inside the windshield 250 and sunlight outside the windshield 250. The second optical signal inside the windshield 250 may travel toward a center point of an eye-box region at an incidence angle on the X-axis, the incidence angle being smaller than 90 degrees relative to the horizontal plane. Sunlight outside the windshield 250 passes through the windshield 250 and the cover 1001 at a second incidence angle greater than the incidence angle relative to the horizontal plane. The sunlight having passed through the windshield 250 and the cover 1001 at the second incidence angle may be multiply reflected in a space between the concave mirror 1310 and the first flat mirror 1320. The sunlight having been multiply reflected in the space between the concave mirror 1310 and the first flat mirror 1320 travels toward a lower region inside the dashboard 1010 in the Z-axis direction.

The imaging device 1000 for the vehicle may further include a motor 1335 to adjust the second inclination angle of the second flat mirror 1330. In this regard, a motor may be applied to the concave mirror 1310 or the second flat mirror 1330 to allow a position of a virtual image to be adjusted according to an eye level of the driver. In addition, a heat-blocking film may be applied to a front end of the picture generation unit (PGU) 1100, the concave mirror 1310, or the cover 1010 to prevent damage from sunlight.

The motor 1335 may be coupled to a rear surface of the second flat mirror 1330. The motor 1335 may adjust the second inclination angle of the second flat mirror 1330 to change a position of, on the Z-axis, the particular region 251R in which the second optical signal is displayed on the windshield 250. Accordingly, the eye-box region may be adjusted to match a line of sight of a user of the vehicle by changing the position of, along the Z-axis, the particular region 251R displayed on the windshield 250.

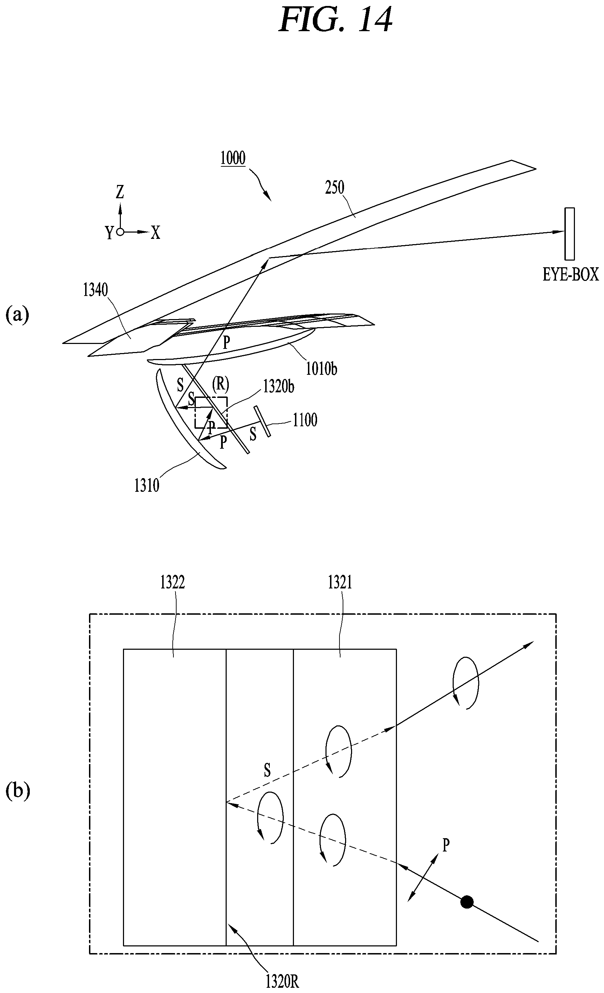

In this regard, FIG. 13 illustrates an arrangement structure of the imaging device for a vehicle, the imaging device capable of being arranged inside a dashboard of the vehicle according to an embodiment of the specification, and a structure in which an optical signal is transmitted and reflected. FIG. 14 illustrates polarization components of an optical signal multiply-reflected and transmitted between the concave mirror and the flat mirror each shown in FIG. 12.

Referring to FIG. 13, an imaging device 1000-2 for a vehicle may be configured to include the picture generation unit (PGU) 1100, the concave mirror 1310, a flat mirror 1320b, and a mirror bench structure 1340. The flat mirror 1320b may be arranged in a first region adjacent to the picture generation unit (PGU) 1100. The concave mirror 1310 may be arranged in the second region spaced apart from the flat mirror 1320b. The imaging device 1000-2 for the vehicle may be configured to further include the cover 1010b and the windshield 250. The cover 1010b of the imaging device 1000-2 for the vehicle may have a curved line structure, but is not limited thereto and may also have a flat structure.

An optical signal having been emitted from the picture generation unit (PGU) 1100 may pass through the flat mirror 1320b, and then, be reflected from the concave mirror 1310. The optical signal having been reflected from the concave mirror 1310 may be reflected from the flat mirror 1320b, and then, reflected from the concave mirror 1310 again. The optical signal having been reflected back from the concave mirror 1310 may pass through the flat mirror 1320b and the cover 1010b and be steer toward the windshield 250 to display an image. Accordingly, the image of the optical signal steered toward the windshield 250 may be displayed in an eye box region of the user.

(a) of FIG. 14 illustrates polarization components of an optical signal transmitted and reflected between the concave mirror 1310 and the flat mirror 1320b in the structure of FIG. 12. (b) of FIG. 12 illustrates a structure in which an optical signal of the second polarization component (P-polarization) is reflected from a partial region B of the flat mirror 1320b shown in (a) of FIG. 12 and converted into an optical signal of the first polarization component (S-polarization).

Referring to FIGS. 13 and 14, the flat mirror 1320b may be configured to include the phase retarder 1321 and the polarizing film 1322. The flat mirror 1320b including the phase retarder 1321 and the polarizing film 1322 may transmit an optical signal of a first polarization component (S-polarization) to convert the transmitted optical signal into an optical signal of a second polarization component (P-polarization). In this regard, the polarizing film 1322 may be configured to transmit the first polarization component.

Meanwhile, the flat mirror 1320b including the phase retarder 1321 and the polarizing film 1322 may reflect an optical signal of the second polarization component (P-polarization) and convert the reflected optical signal into an optical signal of the first polarization component (S-polarization). In this regard, the polarizing film 1322 may be configured to reflect the second polarization component. The phase retarder 1321 may be configured to convert the second polarization component into a second circular polarization component. The phase retarder 1321 may be implemented as a quarter-wave plate (QWP) configured to convert the second polarization component (e.g., P-polarization) into the second circular polarization component (e.g., right-hand circular polarization). The second circular polarization component may be reflected from a reflective surface 1320R of the flat mirror 1320b and converted into a first circular polarization component (e.g., left-hand circular polarization). The first circular polarization component, having been reflected, may be converted into the first polarization component (e.g., S-polarization) by passing through the phase retarder 1321 again.

The polarizing film 1322 may be attached to reflect one component among the first and second polarization components and transmit another component thereof. The polarizing film 1322 may be attached to transmit the first polarization component and reflect the second polarization component. The polarizing film 1322 may be attached between the flat mirror 1320b and the phase retarder 1321.

The flat mirror 1320b to which the phase retarder 1321 and the polarizing film 1322 are attached may transmit an optical signal of the first polarization component (S-polarization) to convert the transmitted optical signal into an optical signal of the second polarization component (P-polarization). The concave mirror 1310 may be configured to reflect all polarization components without a polarization structure such as a separate polarizing film. The concave mirror 1310 may reflect the optical signal of the second polarization component obtained by the converting.

The flat mirror 1320b may reflect the optical signal of the second polarization component (P-polarization) having been reflected from the concave mirror 1310, and convert the reflected optical signal into a second optical signal of the first polarization component (S-polarization). The concave mirror 1310 may reflect again the second optical signal of the first polarization component having been reflected from the flat mirror 1320b. The second optical signal of the first polarization component having been reflected again from the concave mirror 1310 may be transmitted by the flat mirror 1320b to pass through the cover 1010b. The second optical signal of the first polarization component (S-polarization) may be transmitted through the flat mirror 1320b to be converted into the second optical signal of the second polarization component (P-polarization).

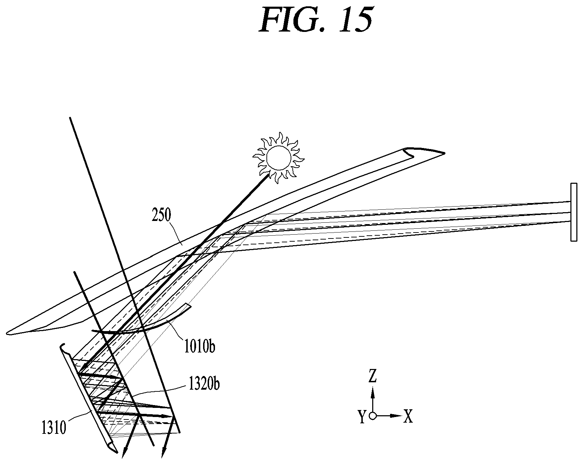

Meanwhile, FIG. 15 illustrates a structure in which sunlight outside a windshield of the imaging device for the vehicle, shown in FIG. 13, passes through a cover to be multiply reflected inside the dashboard.

Referring to FIGS. 13 to 15, the picture generation unit (PGU) 1100 of the imaging device 1000b for the vehicle may be implemented as projection devices. The imaging device 1000b for the vehicle may be configured to include the cover 1010b, the picture generation unit (PGU) 1100, the concave mirror 1310, and the flat mirror 1320b.

The picture generation unit 1100 may be arranged inside the dashboard 1001 of the vehicle. The picture generation unit 1100 may be arranged to generate an optical signal toward one side. The picture generation unit 1100 includes various projection devices and a display configured to display pixels on a screen. The picture generation unit 1100 may be implemented as an LCD, an OLED, DLP, LCoS, or a micro LED.

The concave mirror 1310 may be arranged to be apart from the PGU 1100 to transmit an optical signal from the PGU 1100. Since a polarizing film is not arranged on a reflective surface of the concave mirror 1310, the concave mirror 1310 may be configured to reflect optical signals of all polarization components.

The flat mirror 1320b may be arranged to be apart from the concave mirror 1310 in the first direction of the X-axis to reflect the transmitted optical signal. The concave mirror 1310 may be arranged to be apart from the flat mirror 1320b in the first direction of the X-axis to reflect the optical signal transmitted from the flat mirror 1320b. The PGU 1100 may be arranged to be apart from the flat mirror 1320b in the second direction of the X-axis. The second direction of the X-axis is a positive X-axis direction, and corresponds to a direction opposite to a negative X-axis direction that is the first direction of the X-axis.

The cover 1010b may constitute an exterior appearance (front surface) of the dashboard 1001. The cover 1010 may be made of a non-metallic dielectric material to cause a second optical signal having been reflected from the concave mirror 1310, and then, transmitted through the flat mirror 1320b to pass therethrough. The cover 1010b may have a curved cross-section having a streamlined structure, but is not limited thereto and may have a cross-section having a straight-line structure depending on an application. The second optical signal having passed through the cover 1010b may display an image in the particular region 251R of the windshield 250 and proceed to an eye-box region of a user.

As described above, the concave mirror 1310 may be configured to reflect the first polarization component and the second polarization component orthogonal to the first polarization component. The concave mirror 1310 may be configured as a reflection surface to reflect optical signals of all polarization components. In this regard, the concave mirror 1310 may be implemented as a reflective surface without a polarization structure such as a separate polarizing film.

The flat mirror 1320b may be configured to include the phase retarder 1321 and the polarizing film 1322. The flat mirror 1320b including the phase retarder 1321 and the polarizing film 1322 may transmit the first polarization component and convert the transmitted first polarization into the second polarization component. In this regard, the polarizing film 1322 may be configured to transmit the first polarization component.

Meanwhile, the flat mirror 1320b including the phase retarder 1321 and the polarizing film 1322 may reflect the second polarization component and convert the reflected second polarization component into the first polarization component. In this regard, the polarizing film 1322 may be configured to reflect the second polarization component. The phase retarder 1321 may be configured to convert the second polarization component into the second circular polarization component. The phase retarder 1321 may be implemented as a quarter-wave plate (QWP) configured to convert the second polarization component (e.g., P-polarization) into the second circular polarization component (e.g., right-hand circular polarization). The second circular polarization component may be reflected from the reflective surface 1320R of the flat mirror 1320b and converted into the first circular polarization component (e.g., left-hand circular polarization). The first circular polarization component, having been reflected, may be converted into the first polarization component (e.g., S-polarization) by passing through the phase retarder 1321 again.

The polarizing film 1322 may be attached to reflect one component among the first and second polarization components and transmit another component thereof. The polarizing film 1322 may be attached to transmit the first polarization component and reflect the second polarization component. The polarizing film 1322 may be attached between the flat mirror 1320b and the phase retarder 1321.

The flat mirror 1320b to which the phase retarder 1321 and the polarizing film 1322 are attached may transmit an optical signal of the first polarization component (S-polarization) to convert the transmitted optical signal into an optical signal of the second polarization component (P-polarization). The concave mirror 1310 may be configured to reflect all polarization components without a polarization structure such as a separate polarizing film. The concave mirror 1310 may reflect the optical signal of the second polarization component obtained by the converting.

The flat mirror 1320b may reflect the optical signal of the second polarization component (P-polarization) having been reflected from the concave mirror 1310 and convert the reflected optical signal into the second optical signal of the first polarization component (S-polarization). The concave mirror 1310 may reflect again the second optical signal of the first polarization component having been reflected from the flat mirror 1320b. The second optical signal of the first polarization component having been reflected again from the concave mirror 1310 may be transmitted through the flat mirror 1320b to pass through the cover 1010b. The second optical signal of the first polarization component (S-polarization) may be transmitted through the flat mirror 1320b and be converted into a second optical signal of the second polarization component (P-polarization).

The PGU 1100 may be arranged at an inclination angle greater than 90 degrees relative to the horizontal plane (X-axis). The flat mirror 1320b may be arranged at a first inclination angle greater than 90 degrees relative to the horizontal plane (X-axis). The concave mirror 1310 may be arranged at the second inclination angle greater than 90 degrees relative to the horizontal plane (X-axis). Accordingly, a length, along the X-axis, of the imaging device 1000 for the vehicle including the PGU 1100, the concave mirror 1310, and the flat mirror 1320b may be reduced, thereby decreasing a whole volume thereof. In addition, by configuring the concave mirror 1310 as a reflective structure having a single flat mirror structure, the length along the X-axis may be further reduced compared to the imaging device for the vehicle shown in FIGS. 7 to 12.

The cover 1010b may be arranged at the third inclination angle smaller than 90 degrees relative to the horizontal plane (X-axis). In this regard, a cross-sectional shape thereof may be implemented as that of the cover 1010b having a curved line (streamlined) structure as shown in FIG. 11, or as that of a cover having a straight-line structure. The first inclination angle of the flat mirror 1320b may be configured to be greater than an inclination angle of the PGU 1100. The second inclination angle of the concave mirror 1310 may be configured to be greater than the inclination angle of the PGU 1100. Therefore, a length, on the X-axis, between the flat mirror 1320b and the concave mirror 1310 may be reduced.

The first inclination angle of the flat mirror 1320b and the second inclination angle of the concave mirror 1310 may be configured to be greater than a certain angle to shorten a multiple reflection path of an optical signal. In addition, the first inclination angle of the flat mirror 1320b and the second inclination angle of the concave mirror 1310 may be configured to be equal to or greater than a certain angle to cause sunlight introduced into the dashboard 1001 to be directed toward a lower region of the dashboard 1001 on the Z-axis.

The flat mirror 1320b may be arranged in an upper region relative to the concave mirror 1310 in the Z-axis direction. A first length L1b of the flat mirror 1320b may be configured to be greater than a length of the PGU 1100. A second length L2b of the concave mirror 1310 may be configured to be greater than the length of the PGU 1100. Accordingly, even in a structure in which an optical signal is generated at a wide angle from the PGU 1100, an optical signal may be transmitted to an eye-box region while minimizing optical signal loss. In this regard, optical signal loss may be minimized by the flat mirror 1320b having the first length L1b and the concave mirror 1310 having the second length L2b, each configured to be greater than the length of the PGU 1100.

The imaging device for a vehicle according to the specification has a sunlight avoidance structure. In this regard, a description will be given of steering of the second optical signal inside the windshield 250 and sunlight outside the windshield 250. The second optical signal inside the windshield 250 may travel toward a center point of an eye-box region at an incidence angle along the X-axis, the incidence angle being smaller than 90 degrees relative to the horizontal plane. Sunlight outside the windshield 250 passes through the windshield 250 and the cover 1001 at the second incidence angle greater than the incidence angle relative to the horizontal plane. The sunlight having passed through the windshield 250 and the cover 1001 at the second incidence angle may be multiply reflected in a space between the concave mirror 1310 and the flat mirror 1320b. The sunlight having been multiply reflected in the space between the concave mirror 1310 and the flat mirror 1320b travels toward a lower region inside the dashboard 1010 in the Z-axis direction.

The imaging device 1000 for the vehicle may further include the mirror bench structure 1340 arranged in a region between the cover 1010b and the windshield 250. The mirror bench structure 1340 may be arranged to reflect the sunlight having passed through the windshield 250 to cause the reflected sunlight to pass through the cover 1010b. The sunlight having been reflected from the mirror bench structure 1340 and passed through the cover 1010b may be multiply reflected in the space between the concave mirror 1310 and the flat mirror 1320b. The sunlight having been multiply reflected in the space between the concave mirror 1310 and the flat mirror 1320b travels toward the lower region inside the dashboard 1010 in the Z-axis direction.

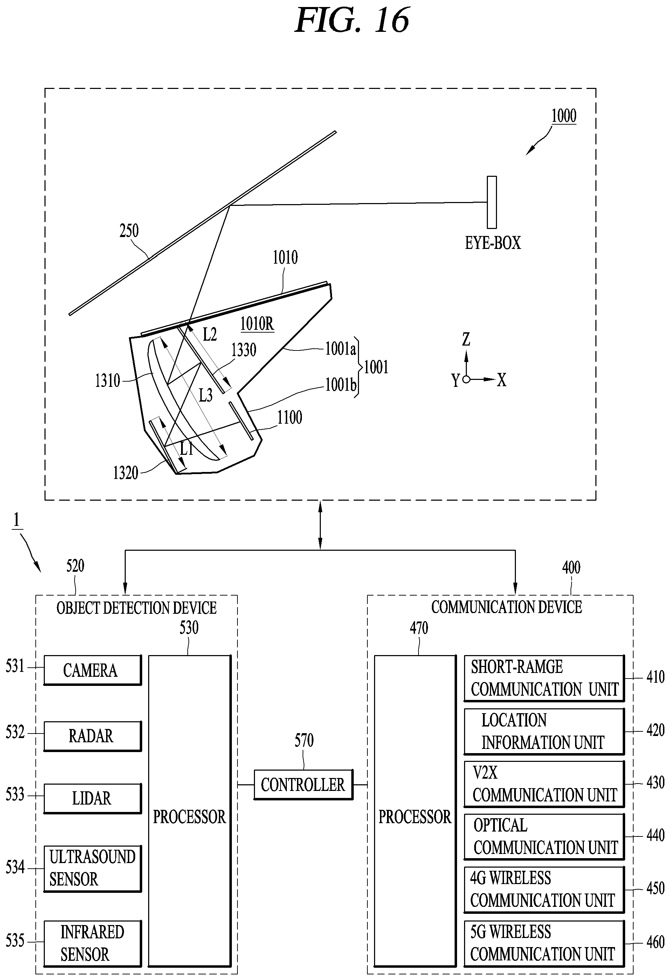

The imaging devices 1000 and 1000b for a vehicle according to one aspect of the specification have been described above. Hereinafter, a vehicle including the imaging device 1000 or 1000b for a vehicle according to another aspect of the specification is to be described. The description about the imaging devices 1000 and 1000b for a vehicle shown in FIGS. 6A to 14, and all the descriptions about a vehicle 1 shown in FIGS. 1 to 5 may be applied to a vehicle including the imaging device 1000 or 1000b for a vehicle which is to be described below. In this regard, FIG. 16 is a block diagram of a vehicle including an imaging device for a vehicle according to the specification.

With reference to FIGS. 1 to 16, a vehicle including the imaging device for a vehicle according to the specification is to be described. The vehicle 1 may be configured to include the windshield 250 and the imaging device 1000 or 1000b for a vehicle. The imaging device for a vehicle may be implemented as the imaging device 1000 for a vehicle shown in FIGS. 7 to 12, or as the imaging device 1000b for a vehicle shown in FIGS. 13 to 15.

Hereinafter, a description will be given of the vehicle 1 including the imaging device 1000 for a vehicle shown in FIGS. 7 to 12. However, the description is not limited thereto and may also be applied to the imaging device 1000b for the vehicle shown in FIGS. 13 to 15. The windshield 250 may be arranged on a front surface of the vehicle 1. The imaging device 1000 or 1000b for the vehicle may be arranged inside the dashboard 1001 of the vehicle 1 and between the windshield 250 and the dashboard 1001. The dashboard 1001 may be configured to include an upper region 1001a and a lower region 1001b.

The imaging device 1000 for the vehicle may be configured to include the cover 1010, the picture generation unit (PGU) 1100, the concave mirror 1310, the first flat mirror 1320, and the second flat mirror 1330.

The picture generation unit 1100 may be arranged inside the dashboard 1001 of the vehicle. The picture generation unit 1100 may be arranged to generate an optical signal toward one side. The picture generation unit 1100 includes various projection devices and a display configured to display pixels on a screen. The picture generation unit 1100 may be implemented as a liquid crystal display (LCD), an organic light-emitting diode (OLED), DLP, LCoS, or a micro LED.

The concave mirror 1310 may be arranged to be apart from the PGU 1100 to transmit an optical signal from the PGU 1100. The polarizing film 1312 may be arranged on at least one surface of the concave mirror 1310. The polarizing film 1312 may be configured to selectively transmit or reflect the optical signal depending on a polarization component of the optical signal from the PGU 1100.

The first flat mirror 1320 may be arranged to be apart from the concave mirror 1310 in a first direction of the X-axis to reflect the transmitted optical signal. The picture generation unit 1100 and the first flat mirror 1320 may be arranged in the lower region 1001b of the dashboard 1001.

The second flat mirror 1330 may be arranged to reflect a second optical signal, which is a signal obtained as the optical signal having been reflected from the first flat mirror 1320 is transmitted through the concave mirror 1310 again. The second flat mirror 1330 may be arranged to be apart from the concave mirror 1310 in a second direction of the X-axis so that the reflected second optical signal is directed toward the concave mirror 1310. The second direction of the X-axis is a positive X-axis direction, and corresponds to a direction opposite to a negative X-axis direction that is a first direction of the X-axis. The second flat mirror 1330 may be arranged on the upper region 1001a of the dashboard 1001. Meanwhile, the concave mirror 1310 may be arranged in the upper region 1001a and lower region 1001b of the dashboard 1001.

The cover 1010 may constitute an exterior appearance (front surface) of the dashboard 1001. The cover 1010 may be made of a non-metallic dielectric material to cause the second optical signal having been reflected from the concave mirror 1310, and then, transmitted through the second flat mirror 1330 to pass therethrough. The second optical signal having passed through the cover 1010 may display an image in the particular region 251R of the windshield 250 and proceed to an eye-box region of a user.

The polarizing film 1312 may be attached to the concave mirror 1310 to transmit a first polarization component and reflect a second polarization component. For example, the first polarization component may be an S-polarization component and the second polarization component may be a P-polarization component, but are not limited thereto and may be any different orthogonal polarization components. The first polarizing film 1322 may be attached to the first flat mirror 1320 to reflect the first polarization component and transmit the second polarization component.

The second flat mirror 1330 may be configured to include the phase retarder 1331 and the second polarizing film 1332. The phase retarder 1331 may be configured to convert the first polarization component into a first circular polarization component. The phase retarder 1331 may be implemented as a quarter-wave plate (QWP) configured to convert the first polarization component (e.g., S-polarization) into the first circular polarization component (e.g., left-hand circular polarization). The first circular polarization component may be reflected from the reflective surface 1330R of the second flat mirror 1330 to be converted into a second circular polarization component (e.g., right-hand circular polarization). The second circular polarization component, having been reflected, may be converted into the second polarization component (e.g., P-polarization) by passing through the phase retarder 1331 again.

The second polarizing film 1332 may be attached to reflect one component among the first and second polarization components and transmit another component thereof. The second polarizing film 1332 may be attached to reflect the first polarization component and transmit the second polarization component. The second polarizing film 1332 may be attached between the second flat mirror 1330 and the phase retarder 1331.

The concave mirror 1310 may transmit an optical signal of the first polarization component emitted from the PGU 1100. The first flat mirror 1320 to which the first polarizing film 1322 is attached may reflect the transmitted optical signal of the first polarization component. As another example, the first flat mirror 1320 may be implemented without a polarizing film to reflect optical signals of all polarization components.

The concave mirror 1310 to which the polarizing film 1311 is attached may transmit the reflected optical signal of the first polarization component again. The second flat mirror 1320 to which the phase retarder 1331 and the second polarizing film 1332 are attached may reflect a second optical signal of the second polarization component by converting a polarization of the optical signal of the first polarization component.

As described above, the phase retarder 1331 may be implemented as a quarter-wave plate (QWP) configured to convert the first polarization component (e.g., S-polarization) into the first circular polarization component (e.g., left-hand circular polarization). The first circular polarization component may be reflected from the reflective surface 1330R of the second flat mirror 1330 to be converted into the second circular polarization component (e.g., right-hand circular polarization). The second circular polarization component, having been reflected, may be converted into the second polarization component (e.g., P-polarization) by passing through the phase retarder 1331 again.

The concave mirror 1310 to which the polarizing film 1311 is attached may reflect the second optical signal of the second polarization component. The reflected second optical signal of the second polarization component may pass through the cover 1010 by being transmitted through the second flat mirror 1330 to which the second polarizing film 1332 is attached.

The PGU 1100 may be arranged at an inclination angle greater than 90 degrees relative to the horizontal plane (X-axis). The first flat mirror 1320 may be arranged at a first inclination angle greater than 90 degrees relative to the horizontal plane (X-axis). The second flat mirror 1330 may be arranged at a second inclination angle greater than 90 degrees relative to the horizontal plane (X-axis). The concave mirror 1310 may be arranged at a third inclination angle greater than 90 degrees relative to the horizontal plane (X-axis). Accordingly, a length, along the X-axis, of the imaging device 1000 for the vehicle including the PGU 1100, the concave mirror 1310, the first flat mirror 1320, and the second flat mirror 1330 may be reduced, thereby decreasing a whole volume thereof.

The cover 1010 or 1010b may be arranged at a fourth inclination angle smaller than 90 degrees relative to the horizontal plane (X-axis). In this regard, a cross-sectional shape thereof may be implemented as that of the cover 1010 having a straight-line structure as shown in FIG. 8, or as that of the cover 1010b having a curved line (streamlined) structure as shown in FIG. 9. The second inclination angle of the second flat mirror 1320 may be configured to be greater than the first inclination angle of the first flat mirror 1320 to reduce a length, on the X-axis, between the first and second flat mirrors 1320 and 1330. The second inclination angle of the second flat mirror 1320 may be configured to be greater than the third inclination angle of the concave mirror 1320 to shorten multiple reflection paths of an optical signal. Additionally, the second inclination angle of the second flat mirror 1320 may be configured to be greater than the third inclination angle of the concave mirror 1320 to cause sunlight introduced into the dashboard 1001 to be directed toward a lower region, on the Z-axis, of the dashboard 1001.

The second flat mirror 1330 may be arranged in an upper region relative to the first flat mirror 1320 in the Z-axis direction. In this regard, the PGU 1100 may be arranged in a lower region of the second flat mirror 1330. An optical signal from the PGU 1100 may be reflected from the first flat mirror 1320 in a lower region along the Z-axis direction, transmitted through the concave mirror 1310, and reflected from the second flat mirror 1330 in an upper region along the Z-axis direction. Therefore, by arranging the first and second flat mirrors 1320 and 1330 only in desired regions, diffuse reflection of unwanted reflection components due to some reflection components in the concave mirror 1310 may be prevented.

The second length L2 of the second flat mirror 1330 may be configured to be greater than the first length L1 of the first flat mirror 1320. Since the first flat mirror 1320 has a single reflection structure, the first flat mirror 1320 has the first length L1 which is a smallest length. The second flat mirror 1330 has a reflection and transmission structure according to a polarization component, and thus, has the second length L2 that is greater than the first length L1. The third length L3 of the concave mirror 1310 may be configured to be greater than the second length L2 of the second flat mirror 1330. The concave mirror 1310 has a multiple transmission structure and a single reflection structure, and thus, has the third length L3 which is a greatest length.

The imaging device for a vehicle according to the specification has a sunlight avoidance structure. In this regard, a description will be given of steering of the second optical signal inside the windshield 250 and sunlight outside the windshield 250. The second optical signal inside the windshield 250 may travel toward a center point of an eye-box region at an incidence angle along the X-axis, the incidence angle being smaller than 90 degrees relative to the horizontal plane. Sunlight outside the windshield 250 passes through the windshield 250 and the cover 1001 at the second incidence angle greater than the incidence angle relative to the horizontal plane. The sunlight having passed through the windshield 250 and the cover 1001 at the second incidence angle may be multiply reflected in a space between the concave mirror 1310 and the first flat mirror 1320. The sunlight having been multiply reflected in the space between the concave mirror 1310 and the first flat mirror 1320 travels toward a lower region inside the dashboard 1010 in the Z-axis direction.

The imaging device 1000 for the vehicle may further include the motor 1335 to adjust the second inclination angle of the second flat mirror 1330. The motor 1335 may be coupled to a rear surface of the second flat mirror 1330. The motor 1335 may adjust the second inclination angle of the second flat mirror 1330 to change a position of, on the Z-axis, the particular region 251R in which the second optical signal is displayed on the windshield 250. Accordingly, the eye-box region may be adjusted to match a line of sight of a user of the vehicle by changing the position of, along the Z-axis, the particular region 251R displayed on the windshield 250.

The imaging device for a vehicle having a reduced volume and capable of avoiding sunlight according to the specification and a vehicle including the imaging device have been described above. Technical effects of the imaging device for a vehicle according to the specification, the imaging device having a reduced volume and capable of avoiding sunlight, and a vehicle including the imaging device may be summarized as described below, but are not limited thereto.

Hereinafter, the technical features of the imaging device for a vehicle according to the specification, the imaging device having a reduced volume, and a vehicle including the imaging device are summarized.

According to the specification, an imaging device for a vehicle, the imaging device having a reduced volume and configured to avoid sunlight, may be implemented by arranging first and second flat mirrors at one side and another side of a concave mirror, respectively, inside a cover of a dashboard.

According to the specification, an imaging device for a vehicle, the imaging device having a reduced volume and ensuring a field of view (FOV) equal to or greater than a particular angle according to a limited mounting space through a multi-reflection structure, may be implemented by configuring some mirrors to reflect or transmit an optical signal.

According to the specification, an imaging device for a vehicle, the imaging device having a reduced volume and configured to avoid sunlight, may be implemented by configuring a mirror structure to multiply reflect sunlight to thereby cause sunlight having been transmitted through a windshield to travel toward a lower region of the vehicle.

According to the specification, an imaging device for a vehicle, the imaging device having a reduced volume, capable of avoiding sunlight, and having degrees of freedom in angles and positions of optical components, may be implemented through a space secured by multi-overlapping optical paths using two or more selectively transmissive/reflective optical components.

According to the specification, an imaging device for a vehicle, the imaging device having a reduced volume and capable of avoiding sunlight, may be implemented to have a structure without back reflection while achieving volume reduction.

Further scope of applicability of the specification will become apparent from the following detailed description. It should be understood, however, that the detailed description and specific examples, such as the preferred embodiment of the disclosure, are given by way of illustration only, since various changes and modifications within the idea and scope of the disclosure will be apparent to those skilled in the art.

## Claims

1. An imaging device for a vehicle, the imaging device comprising:
an image formation device (picture generation unit (PGU)) arranged inside a dashboard of the vehicle and configured to generate an optical signal toward one side;
a concave mirror arranged to be apart from the PGU to transmit the optical signal;
a first flat mirror arranged to be apart from the concave mirror in a first direction to reflect the transmitted optical signal;
a second flat mirror arranged to be apart from the concave mirror in a second direction opposite to the first direction to reflect a second optical signal, which is a signal obtained as the reflected optical signal is transmitted through the concave mirror again, to be directed toward the concave mirror; and
a cover which constitutes an exterior appearance of the dashboard and through which the second optical signal passes, the second optical signal having been transmitted through the second flat mirror,
wherein the second optical signal having passed through the cover displays an image in a particular region of a windshield and travels toward an eye-box region of a user.

2. The imaging device of claim 1, wherein a polarizing film is attached to the concave mirror to transmit a first polarization component and reflect a second polarization component, and
a first polarizing film is attached to the first flat mirror to reflect the first polarization component and transmit the second polarization component.

3. The imaging device of claim 2, wherein the second flat mirror comprises:
a phase retarder configured to convert the first polarization component into a first circular polarization component; and
a second polarizing film attached to reflect the first polarization component and transmit the second polarization component.

4. The imaging device of claim 3, wherein the concave mirror transmits the optical signal of the first polarization component emitted from the PGU,
the first flat mirror to which the first polarizing film is attached reflects the transmitted optical signal of the first polarization component,
the concave mirror transmits the reflected optical signal of the first polarization component again,
the second flat mirror to which the phase retarder and the second polarizing film are attached converts a polarization of a second optical signal of the first polarization component to reflect a second optical signal of the second polarization component,
the concave mirror reflects the second optical signal of the second polarization component, and
the reflected second optical signal of the second polarization component is transmitted through the second flat mirror to pass through the cover.

5. The imaging device of claim 1, wherein the PGU is arranged at an inclination angle greater than 90 degrees relative to a horizontal plane,
the first flat mirror is arranged at a first inclination angle greater than 90 degrees relative to the horizontal plane,
the second flat mirror is arranged at a second inclination angle greater than 90 degrees relative to the horizontal plane,
the concave mirror is arranged at a third inclination angle greater than 90 degrees relative to the horizontal plane,
the cover is arranged at a fourth inclination angle smaller than 90 degrees relative to the horizontal plane.

6. The imaging device of claim 5, wherein the second inclination angle of the second flat mirror is greater than the first inclination angle of the first flat mirror, and greater than the third inclination angle of the concave mirror.

7. The imaging device of claim 5, wherein the second flat mirror is arranged in an upper region relative to the first flat mirror in a Z-axis direction,
a first length of the first flat mirror is configured to be greater than a second length of the second flat mirror, and
a third length of the concave mirror is configured to be greater than the first length of the first flat mirror.

8. The imaging device of claim 5, wherein the second optical signal inside the windshield travels toward a center point of the eye-box region at an incidence angle smaller than 90 degrees relative to the horizontal plane,
sunlight outside the windshield passes through the windshield and the cover at a second incidence angle greater than the incidence angle relative to the horizontal plane to be multiply reflected in a space between the concave mirror and the first flat mirror, and
the sunlight having been multiply reflected in the space travels toward a lower region within the dashboard in the Z-axis direction.

9. The imaging device of claim 5, further comprising a motor coupled to a rear surface of the second flat mirror and configured to adjust the second inclination angle of the second flat mirror.

10. An imaging device for a vehicle, the imaging device comprising:
an image formation device (picture generation unit (PGU)) arranged inside a dashboard of the vehicle and configured to generate an optical signal toward one side;
a flat mirror arranged to be apart from the PGU in the first direction to transmit the optical signal;
a concave mirror arranged to be apart from the flat mirror in the first direction to reflect the transmitted optical signal;
a cover which constitutes an exterior appearance of the dashboard and through which a second optical signal passes, the second optical signal having been multiply reflected between the concave mirror and the flat mirror to be transmitted through the flat mirror,
wherein the second optical signal having passed through the cover displays an image in a particular region of the windshield and travels toward an eye-box region of a user.

11. The imaging device of claim 9, wherein the flat mirror comprises:
a phase retarder configured to convert the first polarization component into a first circular polarization component; and
a polarizing film attached to transmit the first polarization component and reflect the second polarization component,
wherein the concave mirror is configured to reflect all polarization components.

12. The imaging device of claim 11, wherein the flat mirror to which the phase retarder and the polarizing film are attached transmits an optical signal of the first polarization component to convert the transmitted optical signal into an optical signal of the second polarization component,
the concave mirror reflects the optical signal of the second polarization component,
the flat mirror reflects the optical signal of the second polarization component, the optical signal having been reflected from the concave mirror,
the concave mirror reflects the optical signal of the second polarization component again, the optical signal having been reflected from the flat mirror, to generate a second optical signal of the second polarization component, and
the second optical signal of the second polarization component is transmitted through the flat mirror to pass through the cover.

13. The imaging device of claim 10, wherein the PGU is arranged at an inclination angle greater than 90 degrees relative to a horizontal plane,
the flat mirror is arranged at a first inclination angle greater than 90 degrees relative to the horizontal plane,
the concave mirror is arranged at a second inclination angle greater than 90 degrees relative to the horizontal plane,
the cover is arranged at a third inclination angle smaller than 90 degrees relative to the horizontal plane.

14. The imaging device of claim 13, wherein the first inclination angle of the flat mirror is greater than the inclination angle of the PGU, and
the second inclination angle of the concave mirror is greater than the inclination angle of the PGU.

15. The imaging device of claim 12, wherein the flat mirror is arranged in an upper region relative to the concave mirror in a Z-axis direction,
a first length of the flat mirror is configured to be greater than a length of the PGU, and
a second length of the concave mirror is configured to be greater than the length of the PGU.

16. The imaging device of claim 13, wherein the second optical signal inside the windshield travels toward a center point of the eye-box region at an incidence angle smaller than 90 degrees relative to the horizontal plane,
sunlight outside the windshield passes through the windshield and the cover at a second incidence angle greater than the incidence angle relative to the horizontal plane to be multiply reflected in a space between the concave mirror and the flat mirror, and
the sunlight having been multiply reflected in the space travels toward a lower region within the dashboard in a Z-axis direction.

17. The imaging device of claim 13, further comprising a mirror bench structure arranged in a region between the cover and the windshield and configured to reflect the sunlight, having passed through the windshield, to cause the sunlight to pass through the cover.
